# EUROPEAN PATENT SPECIFICATION

(11) **EP 1 943 283 B1**
(45) Date of publication and mention of the grant of the patent: **08.04.2015**
(21) Application number: 06817312.9
(22) Date of filing: 23.10.2006
(51) Int. Cl.: C08G 18/12, C08G 18/42, C08G 18/66, C08G 18/10, C08G 18/48

(54) **POLYURETHANE-UREA ELASTOMERS**
POLYURETHAN-HARNSTOFF-ELASTOMERE
ÉLASTOMÈRES DE POLYURÉTHANE-URÉE

(30) Priority: 27.10.2005 US 260104
(43) Date of publication of application: 16.07.2008
(73) Proprietor: Bayer MaterialScience LLC, Pittsburgh, PA 15205-9741 (US)
(72) Inventor: SARPESHKAR, Ashok, M., Upper St. Clair, PA 15205-9741 (US); DONALDSON, Marylyn, Coraoplois, PA 15108-9741 (US)
(74) Representative: Feldhues, Michael L.F.
(86) International application number: PCT/US2006/041362
(87) International publication number: WO 2007/050542

(56) References cited:
- EP-A2- 1 081 171
- WO-A-96/02584
- US-A- 5 236 741
- US-A- 5 616 677
- US-A- 5 962 617

## Description

### BACKGROUND OF THE INVENTION

The present invention relates to polyurethane-urea elastomers which are preferably optically clear, and to a process for their production.

Various light stable cast elastomers and processes for the production of these elastomers are known and described in the art. See, for example, U.S. Patents 3,755,262, 3,866,242, 4,153,777, 4,404,353 and 4,808,690, and German Offenlegungsschrift 2,109,901.

Transparent high-impact polyurethane products are disclosed by U.S. Patent 3,755,262. These products may be elastomeric or non-elastomeric in nature. Suitable liquid polyurethane reaction mixtures for preparing these optical polyurethanes are made by the one-shot or prepolymer method. Preferred mixtures comprise a non-aromatic polyisocyanate and a reactive hydrogen containing polyol having an average of more than two hydroxyl groups per molecule and molecular weights of up to 800.

U.S. Patent 3,866,242 discloses protective shields consisting of a polyurethane, shaped in the contour of a clipboard, windshield, face shield. These polyurethanes are described as being transparent and having excellent optical clarity. Suitable polyurethanes are prepared by reacting a polyester glycol or a polyether glycol with methylenebis(cyclohexylisocyanate) to form a prepolymer, and reacting this prepolymer with a primary amine group containing compound, preferably one having a methylene bridge between two aromatic rings such as methylenebis(2-chloroaniline).

U.S. Patent 4,153,777 describes polyurethanes having improved physical properties. This reference specifically discloses non-porous polyurethanes which exhibit good optical clarity and resistance to weathering, ultra-violet and thermal exposure. These polyurethanes comprise an isocyanate-terminated prepolymer which is formed by first reacting the isocyanate with water, and then with a polyol to form the prepolymer. This prepolymer is then chain extended or crosslinked with a polyol to form the cured polyurethane. Suitable isocyanates include (cyclo)aliphatic isocyanates and suitable chain extenders and crosslinkers include compounds such as 1,4-butanediol and trimethylolpropane.

High heat distortion temperature transparent polyurethanes which are highly crosslinked are described by U.S. Patent 4,808,690. These comprise a prepolymer prepared from a polyisocyanate and at least one multifunctional hydroxy containing intermediate, with a polyol curing component. Suitable multifunctional hydroxyl containing intermediates include polyhydric alcohols, polyester polyols and blends thereof. Suitable polyisocyanates include (cyclo)aliphatic polyisocyanates, and the polyol curing component can be a polyester or a polyhydric alcohol.

Other light stable elastomers are disclosed in, for example, U.S. Patents 5,510,445, 5,646,230, 5,714,562 and 6,174,984. These elastomers may be polyurethanes as in U.S. 5,714,562 and 6,174,984; polyurethane/ureas in as U.S. 5,646,230 or polyureas as in U.S. 5,510,445.

U.S. Patent 6,174,984 discloses clear resilient polyurethane elastomers. These elastomers comprise the reaction product of A) a prepolymer of at least one diisocyanate and at least one polyether polyol, having a free diisocyanate content of less than 1 % of the prepolymer, B) at least one alkylated aromatic diamine in a quantity sufficient to react with 50 to 105% of the available isocyanate content in the prepolymer, and C) at least one organic acid catalyst in a quantity sufficient to reduce the pot life to no more than two minutes. These elastomers possess high resilience and clarity.

Polyurea elastomers prepared by a one-step process are described in U.S. Patent 5,510,445. The process comprises reacting (a) one or more (cyclo)aliphatic diisocyanates, (b) one or more liquid amine-terminated polymers containing at least two aromatically bound isocyanate-reactive primary or secondary amine groups and/or aliphatically bound isocyanate-reactive secondary amino groups and having a molecular weight of from 400 to 6,000, and (c) one or more aromatic diamine chain extenders having a molecular weight of from 108 to 399, optionally in admixture with one or more crosslinkers. Suitable diisocyanates include 4,4'-dicyclohexylmethane diisocyanate (rMDI) and prepolymers thereof. DETDA is disclosed as a suitable aromatic diamine chain extender.

U.S. Patents 5,811,506 and 6,258,917 describe extrudable thermoplastic urea-extended polyurethanes. The polyurethanes in U.S. 5,811,506 comprise the reaction product of (a) a polyurethane prepolymer, (b) at least one first diamine curing agent, and (c) at least one second diamine curing agent that is different from the first diamine curing agent. Polyurethanes of U.S. 6,258,917 comprise the reaction product of (a) a polyurethane prepolymer, and (b) at least one diamine curing agent selected from the group consisting of 2,4-diamino-3,5-diethyltoluene, 2,6-diamino-3,5-diethyltoluene, 4,4'-methylene-bis(2-6-diisopropylaniline), trimethylene glycol di-para aminobenzoate and mixtures thereof. These polyurethanes have a Shore A hardness of 72 to 84, a DMA Tg of -80°C or less and a TMA softening point of 205 to 208°C.

Polyurethane materials are also disclosed in U.S. Patents 5,962,617 and 6,127,505. In U.S. 5,962,617, these comprise the reaction product of (a) a polyurethane prepolymer prepared by reacting methylene-bis(cyclohexyl isocyanate) with an OH-containing intermediate having a MW_{w} of 500 to 2000, in an equivalent ratio of 2.5 to 4.0 NCO/1.0 OH, and (b) an aromatic diamine curing agent which has two aromatic ring groups attached by a methylene group, in which each aromatic ring is substituted by one NH₂ group, and 3 of the remaining 4 positions on the aromatic ring are substituted, with the equivalent ratio of NH₂:NCO ranging from 0.95:1.0 to 1.02:1.0.

U.S. 6,127,505 discloses that these polyurethane materials comprise the reaction product of (a) a polyurethane prepolymer and (b) at least a first aromatic diamine curing agent. Suitable prepolymers are prepared by reacting an aliphatic or cycloaliphatic diisocyanate with an OH containing intermediate having a MW_{w} of 400 to 2,000, in which the equivalent ratio is 2.5 to 4.0 NCO/1.0 OH. The diamine curing agent is selected from 2,4-diamino-3,5-diethyl toluene, 2,6-diamino-3,5-diethyl toluene and mixtures thereof, in an equivalent ratio of 0.85 to 1.02 NH₂: 1.0 NCO.

Light stable one-shot urethane-urea elastomers and a process for their production are described in U.S. Patent 6,562,932. This process comprises reacting a polyisocyanate or prepolymer thereof with an isocyanate-reactive component, in the presence of C) at least one organometallic catalyst. Suitable isocyanate-reactive components comprise (1) at least one aromatic diamine compound and (2) at least one organic compound having at least two hydroxyl groups and having a molecular weight of 62 to 6,000.

U.S. Patent 6,939,939 discloses a polyurea/urethane material and a process for making this material. These polyurea/urethane materials are described as having good optical quality and high impact resistance. These comprise the reaction product of A) a urethane prepolymer prepared by reacting a first diisocyanate with a first polyol in amounts such that the prepolymer has an equivalent ratio of at least 3 isocyanate groups per hydroxyl group; with B) a curing agent comprising (1) a hydroxyl-terminated extended chain polymer prepared by reacting a second diisocyanate with a second polyol in an amount such that the resultant polymer has an equivalent ratio of between 3 and 8 hydroxyl groups per isocyanate group; and (2) a diamine; in the presence of a catalyst.

There are processing advantages in both U.S. 6,562,932 and U.S. 6,939,939 due to the isocyanate prepolymers containing a high ratio of isocyanate groups to hydroxyl groups. In spite of these advantages, the need for additional improvements exists, particularly with regard to further processing improvements and cure rates.

It is known to use polyaspartic acid esters in coating compositions. These coatings are based on polyurethanes and/or polyureas which comprise the reaction product of a polyisocyanate component and an isocyanate-reactive component corresponding to the specified formula which represents polyaspartic acid esters. For example, see U.S. Patents 5,126,170, 5, 236,741, 5,243,012, 5,489,704, 5,580,945 and 5,736,604. U.S. Patent 5,489,704 describes aldimine/aspartates which correspond to a specific formula and the preparation of coating compositions from the reaction of these aldimine/aspartates with polyisocyanates. Polyaspartic acid esters have not, however, been used in optically clear polyurethane/ureas.

Advantages of the presently claimed process include additional improvements in processing. Frequently, a significantly faster rate of production of parts is also seen. The improved processing in the present invention results in parts having decreased distortions, striations, flow lines and the absence of haze. Thus, the present invention results in blemish-free parts which may be removed from the mold in as few as 2-3 hours (referred to as green-cure time), and are subsequently post-cured offline. The presently required combination of an aromatic primary diamine compound and an isocyanate-reactive compound containing 2 secondary amine groups results in improved parts and improved processing over other known systems and processes.

### SUMMARY OF THE INVENTION

This invention relates to polyurethane-urea compositions and to a process for their production. More specifically, these compositions are preferably optically clear, and vary in properties from elastomers having a Shore A hardness in the range of 60 to 95 Shore A to hard solid polyurethane-ureas having a Shore D hardness in the range of 50 to 85. In addition, the polyurethane-ureas of the present invention are preferably characterized by short green-cure times which typically range from, for example, 30 minutes up to 5 hours, preferably 1 to 4 hours and more preferably 2 to 3 hours.

The polyurethane-ureas of the present invention comprise the reaction product of:
(A) at least one (cyclo)aliphatic polyisocyanate or prepolymer thereof, having an NCO group content of 4 to 50%, an average functionality of 2 to 3;
   with
(B) an isocyanate-reactive component comprising:
   (1) one or more aromatic diamine compounds containing two primary aromatic amine groups and having a molecular weight of 100 to 1,000,
   (2) one or more isocyanate-reactive compounds containing two secondary amine groups and having a molecular weight of 100 to 750, and preferably 200 to 600, in which the secondary amine groups are attached to (cyclo)aliphatic moieties and/or aromatic moieties;
      and, optionally,
   (3) one or more hydroxyl-functional compounds having an OH functionality of from 2 to 3 and a molecular weight of 100 to 4,000;
      in the presence of
(C) one or more catalysts;
wherein the relative quantities of (A) and (B) are such that the Isocyanate Index is from 95 to 110, preferably from 100 to 105.

The present invention is also directed to a process for preparing polyurethane-ureas. These polyurethane-ureas are elastomers in the Shore A hardness range and solid polyurethane-ureas in the Shore D hardness range. It is preferred that the solid polyurethane-ureas in the Shore D hardness range are optically clear.

The process for preparing the polyurethane-ureas of the present invention comprises:
(I) reacting
   (A) at least one (cyclo)aliphatic polyisocyanate or prepolymer thereof, having an NCO group content of 4 to 50% and an average functionality of 2 to 3;
      with
   (B) an isocyanate-reactive component comprising:
      (1) one or more aromatic diamine compounds containing two primary aromatic amine groups and having a molecular weight of 100 to 1,000,
      (2) one or more isocyanate-reactive compounds containing two secondary amine groups and having a molecular weight of 100 to 750, and preferably 200 to 600, in which the secondary amine groups are attached to (cyclo)aliphatic moieties and/or aromatic moieties;
         and, optionally,
      (3) one or more hydroxyl-functional compounds having an OH functionality of from 2 to 3 and a molecular weight of 100 to 4,000;
         in the presence of
   (C) one or more catalysts;
      wherein the relative quantities of (A) and (B) are such that the Isocyanate Index is from 95 to 110, preferably from 100 to 105.

### DETAILED DESCRIPTION OF THE INVENTION

The liquid polyisocyanate or polyisocyanate prepolymer, component (A), has an NCO group content of 4 to 50%, and an average functionality of 2 to 3. Prepolymers are preferred.

It is preferred that component (A) has an NCO group content of at least 4% by weight. It is also preferred that component (A) has an NCO group content of less than or equal to 50% by weight, and more preferably less than or equal to 26% by weight. Component (A) may also have an NCO group content ranging between any combination of these upper and lower values, inclusive, e.g. from at least 4% to 50%, and more preferably from at least 4% to 26% by weight. It is also preferred that component (A) has a functionality of 2.

In accordance with the present invention, component (A) may, for example, comprise:
(A)(1) from 20 to 100%, preferably from 30 to 95%, more preferably from 60 to 90% and most preferably from 70 to 80% by weight, of a (cyclo)aliphatic polyisocyanate,
   and
(A)(2) from 0 to 80%, preferably from 5 to 70%, more preferably from 10 to 40% and most preferably from 20 to 30% by weight, of at least one hydroxyl-functional compound having a molecular weight of from 100 to 4,000;
   with the sum of (A)(1) and (A)(2) totaling 100% by weight of component (A).

In addition, component (A) may comprise a % by weight of (A)(1) ranging between any combination of these upper and lower values, inclusive, and a % by weight of (A)(2) ranging between any combination of these upper and lower values, inclusive. The sum of the % by weight of (A)(1) and the % by weight of (A)(2) totals 100% by weight of component (A).

In the embodiment of the present invention in which component (A) comprises an isocyanate prepolymer, the relative quantities of (A)(1) the isocyanate and (A)(2) the hydroxyl-functional compound may vary from those amounts disclosed hereinabove. When component (A) is a prepolymer, the relative quantities of (A)(1) the isocyanate and (A)(2) the hydroxyl-functional compound are typically selected such that the equivalent ratio of NCO to OH in the prepolymer is from at least 2.25:1.0, preferably at least 5.0:1.0, more preferably at least 6.0:1.0 and most preferably at least 6.5:1.0. The relative quantities of (A)(1) the isocyanate and (A)(2) the hydroxyl-functional compound are also typically selected such that the equivalent ratio of NCO to OH in the prepolymer is less than or equal to 20.0:1.0, preferably less than or equal to 12.25:1.0, more preferably less than or equal to 10.0:1.0, and most preferably less than or equal to 8.0:1.0. The prepolymer may have an equivalent ratio of NCO to OH ranging between any combination of these upper and lower values, inclusive, e.g. from 2.25 NCO:1.0 OH to 20.0 NCO:1.0 OH, preferably from 5.0 NCO:1.0 OH to 12.25 NCO:1.0 OH, more preferably from 6.0 NCO:1.0 OH to 10.0 NCO:1.0 OH, and most preferably from 6.5 NCO:1.0 OH to 8.0 NCO:1.0 OH.

Component (A) can be a liquid monomeric (cyclo)aliphatic diisocyanate or a liquid polyisocyanate prepolymer. The liquid polyisocyanate prepolymer component (A) can be formed, for example, by reacting the diisocyanate (A)(1) and organic compound (A)(2) having at least 2 hydroxyl groups under a nitrogen blanket or sparge, optionally, in the presence of a catalyst, and heating to a temperature of from 60 to 100°C for between 2 and 4 hours. The reaction is monitored by %NCO titration. Other suitable processes for the preparation of prepolymers, which are known, can also be used.

As used herein, the phrase (cyclo)aliphatic encompasses compounds that have aliphatic isocyanate groups and/or cycloaliphatic isocyanate groups. Suitable (cyclo)aliphatic polyisocyanates for component (A)(1) typically includes those having an NCO group content of at least 14%, preferably of at least 30%, and most preferably of at least 32%. The (cyclo)aliphatic polyisocyanates for component (A)(1) also typically has an NCO group content of less than or equal to 50%, and most preferably less than or equal to 45%. Suitable (cyclo)aliphatic polyisocyanates for component (A)(1) include those which typically have an NCO group content ranging between any combination of these upper and lower values, inclusive, e.g. from 14% to 50%, preferably from 30% to 50% and most preferably from 32% to 45% by weight. Also, suitable polyisocyanates typically have a functionality of from 2 to 3.

Some examples of suitable (cyclo)aliphatic polyisocyanates include those such as 4,4'-dicyclohexylmethane diisocyanate (rMDI), 1,6-hexamethylene diisocyanate (HDI), isophorone diisocyanate (IPDI), 1,4-cyclohexane diisocyanate (CHDI), 1,3-bis(isocyanatomethyl)cyclohexane (H-XDI), m-tetramethylxylene diisocyanate (m-TMXDI), and mixtures thereof. The preferred polyisocyanate for component (A)(1) is 4,4'-dicyclohexylmethane diisocyanate, which has an isocyanate group content of 32%, and is commercially available from Bayer MaterialScience LLC.

Component (A)(2), the organic compound, has at least two hydroxyl groups. Compounds suitable for component (A)(2) typically have a molecular weight of at least 100, and preferably of at least 200. Organic compounds for component (A)(2) also typically have molecular weights of less than or equal to 4,000, more preferably less than or equal to 2,000 and most preferably less than or equal to 1,000. The organic compounds to be used as component (A)(2) may have a molecular weight ranging between any combination of these upper and lower values, inclusive, e.g. from 100 to 4,000, preferably from 200 to 4,000, more preferably from 200 to 2,000 and most preferably from 200 to 1,000.

Suitable organic compounds to be used as component (A)(2) in accordance with the present invention include those hydroxyl-functional compounds having at least 2 hydroxyl groups and preferably no more than 3 hydroxyl groups. It is preferred that component (A)(2) contain 2 hydroxyl groups. The molecular weight range of component (A)(2) is from at least 200 to no more than 4,000, and is most preferably from 200 to 1,000. Examples of suitable compounds to be used as component (A)(2) include glycols, polyethers, polythioethers, polyesters, polycaprolactones, polycarbonates, polyacetals and mixtures thereof.

Examples of glycols and other suitable components for (A)(2) include compounds known to be suitable as low molecular weight chain extenders as well as low molecular weight diols. Some examples include those compounds with molecular weight of 350 or less such as, for example, an alkylene (C₂-₂₂) glycol, e. g., ethylene glycol, propylene glycol, 1,4-butylene glycol, 1,3-butylene glycol, 1,2-butylene glycol, 1,6-hexanediol, 2-methyl-1,3-propanediol, 2,2,4-trimethylpentane-1,3-diol, neopentyl glycol, 1,10-dodecanediol; poly(alkylene(C₂-₁₅) glycol), e.g., diethylene glycol, triethylene glycol, tetraethylene glycol, dipropylene glycol, tripropylene glycol; polytetramethylene glycol-250, other glycols such as cyclohexane dimethanol, hydrogenated bisphenol A, 1,4-dihydroxy-2-butene, 2,6-dimethyl-1-octene-3,8-diol, hydroquinone bis(2-hydroxy-ethyl)ether, resorcinol bis(2-hydroxy-ethyl)ether, bishydroxy-ethylene terephthalate; low molecular weight triols with molecular weight of 350 or less such as glycerin, 2-methyl-2-hydroxy-methyl-1,3-propane-diol, 2,4-dihydroxy-3-hydroxymethyl-pentane, 1,2,6-hexanetriol, 1,1,1-tris(hydroxymethyl)propane, 2,2-bis(hydroxymethyl)-3-butanol and other aliphatic triols (C₈-₂₀), as well as mixtures thereof. It is also possible that mixtures of the above mentioned compounds with small amounts of monofunctional and/or higher-functional compounds can be used as component (A)(2) provided that the above functionality and molecular weight requirements are satisfied.

Suitable polyester polyols to be used as component (A)(2) may, for example, be prepared from organic dicarboxylic acids having from 2 to 12 carbon atoms, preferably aliphatic dicarboxylic acids having from 4 to 6 carbon atoms, and polyhydric alcohols, preferably diols, having from 2 to 12 carbon atoms, preferably from 2 to 6 carbon atoms. Examples of possible dicarboxylic acids are: succinic acid, glutaric acid, adipic acid, suberic acid, azelaic acid, sebacic acid, decanedicarboxylic acid, maleic acid, fumaric acid, phthalic acid, isophthalic acid and terephthalic acid. These dicarboxylic acids may be used individually or else in a mixture with one another. Instead of the free dicarboxylic acids, it is also possible to use the corresponding dicarboxylic acid derivatives, such as esters of dicarboxylic acids with alcohols having from 1 to 4 carbon atoms, or anhydrides of dicarboxylic acids. Examples of di- and poly-hydric alcohols are: ethanediol, diethylene glycol, 1,2- and 1,3-propanediol, dipropylene glycol, 1,4-butanediol, 1,5-pentanediol, 1,6-hexanediol, 1,10-decanediol, 1,12-dodecanediol, glycerol and trimethylolpropane. A preferred group of polyester polyols to be used in the preparation of isocyanate prepolymers for the present invention include those made from lactones, e. g. ε -caprolactone or hydroxycarboxylic acids, e.g. omega-hydroxycaproic acid. As is known to one skilled in the art of polyurethane chemistry, polyester polyols can be prepared by reacting lactone with a glycol (i.e. diol or triol) to form a polyester polyol suitable for making prepolymers in accordance with the present invention. Preferred polyester polyols for the production of optically clear polyurethane ureas according to the invention include those polyesters which do not have a tendency to crystallize.

To prepare the polyester polyols, the organic, e.g. aromatic and preferably aliphatic, polycarboxylic acids and/or derivatives of these and polyhydric alcohols may be polycondensed without a catalyst or preferably in the presence of esterification catalysts, usefully in an atmosphere of inert gas, e.g. nitrogen, carbon monoxide, helium, argon, in the melt at from 150 to 250°C, preferably from 180 to 220°C, if desired under reduced pressure, as far as the desired acid number, which is advantageously less than 10, preferably less than 2. In a preferred embodiment, the esterification mixture is polycondensed to an acid number of from 80 to 30, preferably from 40 to 30, under atmospheric pressure and then under a pressure of less than 500 mbar, preferably from 50 to 150 mbar. Examples of possible esterification catalysts are catalysts comprising iron, cadmium, cobalt, lead, zinc, antimony, magnesium, titanium or tin, in the form of metals, metal oxides or metal salts. However, the polycondensation may also be carried out in a liquid phase in the presence of diluents and/or carriers, such as benzene, toluene, xylene or chlorobenzene for azeotropic removal of the water of condensation by distillation.

Also, suitable compounds to be used as component (A)(2) include polycarbonate polyols obtained by a ring-opening polymerization of ethylene carbonate using the low molecular weight diols and low, molecular weight triols as an initiator; and natural polyols such as castor oil and/or soy oil; polyolefin polyols such as polybutadiene polyol and polyisoprene polyol and hydrated products thereof. These may be used alone or as mixtures of two or more of them.

Other suitable polyols for component (A)(2) include polycarbonate diols, which may be obtained by reacting diphenyl or dimethyl carbonate with low molecular weight diols or triols, ε -caprolactone-modified diols or triols of the type mentioned above.

Suitable polyesters, polythioethers, polyacetals, polycarbonates and other polyhydroxyl compounds which may be used in accordance with the invention may be found, for example, in High Polymers, Volume XVI, "Polyurethanes, Chemistry and Technology," by Saunders-Frisch, Interscience Publishers, New York, London, Vol. I, 1962, pages 32-42 and 44-54, and Volume II, 1964, pages 5-6 and 198-199; and in Kunststoff-Handbuch, Vol. VII, Vieweg-Hochtlen, Carl Hanser Verlag, Munich, 1966, pages 45-71.

The polyethers suitable for use in accordance with the present invention are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF₃ or KOH, or by chemically adding these epoxides, preferably ethylene oxide and propylene oxide, in admixture or successively to components containing reactive hydrogen atoms such as water, alcohols or amines. Suitable initiator compounds which can be alkoxylated to form component (A)(2) in the present invention include, for example, the low molecular weight chain extenders, ethylene glycol, propylene glycol, diethylene glycol, dipropylene glycol, butyl carbitol, butanediol, pentanediol, bisphenol A, neopentyl glycol, trimethyl pentanediol, cyclohexane dimethanol, trimethylol propane . Mixtures of suitable initiator compounds can also be used provided that the functionality of the resultant polyol mixture is at least 2.0.

Suitable polyethers include, for example, those compounds based on difunctional starters such as, for example, water, ethylene glycol, propylene glycol. These compounds include copolymers of ethylene oxide and propylene oxide.

A particularly preferred prepolymer to be used as component (A) herein comprises the reaction product of (A)(1) a (cyclo)aliphatic polyisocyanate comprising 4,4'-dicyclohexylmethane diisocyanate, with (A)(2) at least one organic compound having at least two hydroxyl groups and a molecular weight of from 100 to 4,000. In this particularly preferred embodiment, the prepolymer preferably comprises the reaction product of (A)(1) from 40 to 80% by weight, based on 100% by weight of (A), of 4,4'-dicyclohexylmethane diisocyanate, with (A)(2) from 20 to 60% by weight, based on 100% by weight of (A), of at least one hydroxyl-functional compound (that preferably has at least two hydroxyl groups) and has a molecular weight of from 100 to 4,000 (preferably 200 to 4,000, more preferably 200 to 2,000, and most preferably 200 to 1,000). It is most particularly preferred in this embodiment that (A)(2) comprise one or more polytetramethylene ether glycols, one or more polycaprolactones, or mixtures thereof.

As previously discussed, when component (A) comprises an isocyanate prepolymer, the relative quantities of (A)(1) the isocyanate and (A)(2) the hydroxyl-functional compound should be selected such that the NCO:OH equivalent ratio for the prepolymer is satisfied. Thus, the relative quantities of (A)(1) the isocyanate and (A)(2) the hydroxyl-functional compound are typically selected such that the prepolymer has an equivalent ratio of NCO to OH ranging between any combination of these upper and lower values, inclusive, e.g. from 2.25 NCO:1.0 OH to 20.0 NCO:1.0 OH, preferably from 5.0 NCO:1.0 OH to 12.25 NCO:1.0 OH, more preferably from 6.0 NCO:1.0 OH to 10.0 NCO:1.0 OH, and most preferably from 6.5 NCO:1.0 OH to 8.0 NCO:1.0 OH.

In accordance with one embodiment of the present invention, component (B) may, for example, comprise:
(B)(1) from 10 to 95% by weight, preferably from 50 to 95% by weight, more preferably from 60 to 95% by weight, most preferably from 70 to 90% by weight and most particularly preferably from 80 to 90% by weight, of at least one aromatic diamine compound which contains two primary amine groups;
   and
(B)(2) from 5 to 90% by weight, preferably from 5 to 50% by weight, more preferably from 5 to 40% by weight, most preferably from 10 to 30% by weight and most particularly preferably from 10 to 20% by weight, of at least one isocyanate-reactive compound containing 2 secondary amine groups which are attached to aliphatic moieties and/or aromatic moieties;
with the sum of the %'s by weight of (B)(1) and (B)(2) totaling 100% by weight of component (B).

Component (B) may comprise a % by weight of (B)(1) ranging between any combination of these upper and lower values, inclusive, and a % by weight of (B)(2) ranging between any combination of these upper and lower values, inclusive. When only (B)(1) and (B)(2) are present, the sum of the % by weight of (B)(1) and the % by weight of (B)(2) totals 100% by weight of (B).

In an alternate embodiment of the present invention, component (B) may, for example, comprise:
(B)(1) from 30% to 79% by weight, preferably from 40% to 69% by weight, and most preferably from 50% to 60% by weight, of at least one aromatic diamine compound which contains two primary amine groups;
(B)(2) from 1% to 20% by weight, preferably from 1% to 10% by weight, and most preferably from 2% to 5% by weight, of at least one isocyanate-reactive compound containing 2 secondary amine groups which are attached to aliphatic moieties and/or aromatic moieties;
   and
(B)(3) from 20% to 50% by weight, preferably from 30% to 50% by weight, and most preferably from 38% to 45% by weight, of one or more hydroxyl functional compounds having an OH functionality of from 2 to 3 and a molecular weight of from 100 to 4,000;
   with the sum of the %'s by weight of (B)(1), (B)(2) and (B)(3) totaling 100% by weight of component (B).

In addition, component (B) may comprise a % by weight of (B)(1) ranging between any combination of these upper and lower values, inclusive, a % by weight of (B)(2) ranging between any combination of these upper and lower values, inclusive, and a % by weight of (B)(3) ranging between any combination of these upper and lower values, inclusive. The sum of the % by weight of (B)(1), the % by weight of (B)(2) and the % by weight of (B)(3) totals 100% by weight of (B).

In accordance with the present invention, the relative quantities of (B)(1), (B)(2) and, when present, (B)(3), may vary from those amounts disclosed hereinabove. The relative quantities of components (B)(1), (B)(2) and, optionally (B)(3), are selected such that the equivalent ratio of NH₂: NCO, i.e. equivalents of primary amine from component (B)(1) to equivalents of NCO from component (A), is from at least 0.6 NH₂:1.0 NCO, more preferably from at least 0.65 NH₂ :1.0 NCO and most preferably from at least 0.68 NH₂ :1.0 NCO. The relative quantities are also such that the equivalent ratio of NH₂: NCO (i.e. primary amine to NCO) is less than or equal to 0.95 NH₂ :1.0 NCO, preferably less than or equal to 0.9 NH₂ :1.0 NCO, more preferably less than or equal to 0.75 NH₂ :1.0 NCO and most preferably less than or equal to 0.7 NH₂ :1.0 NCO. The relative quantities of components may be such that the equivalent ratio of NH₂: NCO (i.e. equivalents of primary amine to equivalents of NCO) ranges between any combination of these upper and lower values, inclusive, e.g. from 0.6 NH₂ :1.0 NCO to 0.95 NH₂:1.0 NCO, preferably from 0.6 NH₂ :1.0 NCO to 0.9 NH₂:1.0 NCO, more preferably from 0.65 NH₂ :1.0 NCO to 0.75 NH₂:1.0 NCO and most preferably from 0.68 NH₂ :1.0 NCO to 0.7 NH₂:1.0 NCO.

In accordance with the present invention, component (B)(1) comprises at least one aromatic diamine compound which contains two primary amine groups. These aromatic diamine compounds typically have a molecular weight of at least 100 and most preferably at least 150. Aromatic diamine compounds suitable for component (B)(1) also typically have a molecular weight of less than or equal to 1,000, preferably less than or equal to 400 and most preferably less than or equal to 250. Suitable aromatic diamine compounds which contain two primary amine groups may also have a molecular weight ranging between any combination of these upper and lower values, inclusive, e.g. from 100 to 1,000, preferably from 100 to 400 and most preferably from 150 to 250.

Most preferred compounds to be used as component (B)(1) are those aromatic amine compounds which contain two primary amine groups and having a molecular weight of 150 to 250. The aromatic diamines can contain ether groups and/or ester groups but are preferably free of such groups. Amine-terminated polyethers with the amine-terminating groups as aromatic amine groups are also suitable for use as component (B)(1), which are also commonly called polyethers terminated with aromatic amine groups.

It is also noted that components (B)(1), (B)(2) and when present, (B)(3), are mutually exclusive of each other. In other words, compounds which are suitable for component (B)(1) do not also include isocyanate-reactive compounds containing secondary amine groups which are attached to aliphatic groups and/or aromatic groups; and similarly compounds suitable for component (B)(2) do not also contain primary amine groups.

Suitable examples of aromatic diamine compounds containing two primary amine groups which can be used as component (B)(1) include those compounds commonly known and described as aromatic diamine chain extenders having a molecular weight of from 100 to 1,000. The preferred amine chain extenders contain exclusively aromatically bound primary amino groups, and preferably also contain alkyl and heteroalkyl substituents. Examples of such diamines include 1,4-diaminobenzene; 2,4- and/or 2,6-diaminotoluene; 2,4'- and/or 4,4'-diaminodiphenylmethane; 3,3'-dimethyl-4,4'-diaminodiphenyl-methane; 3,3'-dichloro-4,4'-diaminodiphenylmethane (MOCA); 1-methyl-3,5-bis(methylthio)-2,4-and/or-2,6-diaminobenzene; 1,3,5-triethyl-2,4-diamino-benzene; 1,3,5-triisopropyl-2,4-diaminobenzene; 1-methyl-3,5-diethyl-2,4- and/or-2,6-diaminobenzene (also known as 3,5-diethyl-2,4- and/or-2,6-toluenediamine, or DETDA); 3,5-dithiomethyl-2,4-diamino toluene (i.e. ETHACURE 300); 4,6-dimethyl-2-ethyl-1,3-diaminobenzene; 3,5,3',5'-tetraethyl-4,4-diaminodiphenylmethane; 3,5,3',5'-tetraisopropyl-4,4'-diamino-diphenylmethane; 3,5-diethyl-3',5'-diisopropyl-4,4'-diamino-diphenyl-methane; 2,4,6-triethyl-m-phenylene-diamine (TEMPDA); 3,5-diisopropyl-2,4-diamino-toluene; 3,5-di-sec-butyl-2,6-diaminotoluene; 3-ethyl-5-isopropyl-2,4-diaminotoluene; 4,6-diisopropyl-m-phenylene-diamine; 4,6-di-tert-butyl-m-phenylenediamine; 4,6-diethyl-m-phenylene-diamine; 3-isopropyl-2,6-diaminotoluene; 5-isopropyl-2,4-diaminotoluene; 4-isopropyl-6-methyl-m-phenylenediamine; 4-isopropyl-6-tert-butyl-m-phenylenediamine; 4-ethyl-6-isopropyl-m-phenylenediamine; 4-methyl-6-tert-butyl-m-phenylenediamine; 4,6-di-sec-butyl-m-phenylenediamine; 4-ethyl-6-tertbutyl-m-phenylenediamine; 4-ethyl-6-sec-butyl-m-phenylene-diamine; 4-ethyl-6-isobutyl-m-phenylenediamine; 4-isopropyl-6-isobutyl-m-phenylenediamine; 4-isopropyl-6-sec-butyl-m-phenylenediamine; 4-tert-butyl-6-isobutyl-m-phenylenediamine; 4-cyclopentyl-6-ethyl-m-phenylene-diamine; 4-cyclohexyl-6-isopropyl-m-phenylenediamine; 4,6-dicyclopentyl-m-phenylenediamine; 2,2',6,6'-tetraethyl-4,4'-methylenebisaniline; 2,2',6,6'-tetraisopropyl-4,4'-methylenebisaniline (methylenebis diisopropylaniline); 2,2',6,6'-tetra-sec-butyl-4,4'-methylenebisaniline; 2,2'-dimethyl-6,6'-di-tert-butyl-4,4'-methylenebisaniline; 2,2'-di-tert-butyl-4,4'-methylenebisaniline; and 2-isopropyl-2',6'-diethyl-4,4'-methylenebisaniline. Such diamines may, of course, also be used as mixtures.

It is particularly preferred that component (B)(1), the aromatic diamine compound which contains two primary amine groups comprise an isomer of diethyltoluenediamine (i.e. DETDA), a mixture of isomers of diethyltoluenediamine, an isomer of di-(methylthio)toluenediamine (i.e. ETHACURE 300), and a mixture of isomers of di-(methylthio)toluenediamine. A particularly preferred isomeric mixture comprises 75 to 81 % by wt. of the 2,4-isomer of diethyltoluenediamine and 21 to 25% by wt. of the 2,6-isomer of diethyltoluenediamine. This is commercially available under the tradename Ethacure 100 from Albermarle Corporation. The color stabilized version of Ethacure 100 which is available under the tradename Ethacure 100LC is particularly preferred.

As previously discussed, in accordance with the present invention, the relative quantities of (B)(1) and (A) should be selected such that the equivalent ratio of NH₂: NCO (i.e. primary amine to NCO) disclosed above is satisfied. Thus, the relative quantities of (B)(1) and (A) are typically selected such that the NH₂:NCO equivalent ratio ranges between any combination of the following upper and lower values, inclusive, e.g. from 0.6 NH₂ :1.0 NCO to 0.95 NH₂:1.0 NCO, preferably from 0.6 NH₂ :1.0 NCO to 0.9 NH₂:1.0 NCO, more preferably from 0.65 NH₂ :1.0 NCO to 0.75 NH₂:1.0 NCO and most preferably from 0.68 NH₂ :1.0 NCO to 0.7 NH₂:1.0 NCO.

Suitable compounds containing two secondary amine groups are to be used as component (B)(2) in accordance with the present invention. These compounds which contain two secondary amine groups may have a molecular weight of at least 100, preferably at least 200, and most preferably at least 300. The compounds containing two secondary amine groups also typically have a molecular weight of less than or equal to 750, and preferably less than or equal to 600. Compounds which contain two secondary amine groups may have a molecular weight ranging between any combination of these upper and lower values, inclusive, e.g. from 100 to 750, preferably 200 to 600 and most preferably 300 to 600, and in which the amine groups are attached to (cyclo)aliphatically bound carbon atoms and/or aromatically bound carbon atoms. It is preferred that both of the amine groups are aliphatically bound to the molecule. It is most preferred that secondary amine compounds which are used as component (B)(2) herein contain ester functionality and, more particularly that these are free of ether functionality.

In the broadest sense, suitable compounds to be used as component (B)(2) herein may correspond to the general structure (I):

R¹-NH-R²- NH-R³ (I)

wherein:
R¹, R² and R³ may be the same or different and each represents an aliphatic, an aromatic or a cycloaliphatic moiety that is inert to isocyanates.

Some examples of suitable compounds which contain two secondary amine groups to be used herein include, for example, N-alkylsubstituted and N,N'-dialkyl-substituted aromatic diamines, which may also be substituted by alkyl groups on their aromatic radical, and comprising 1 to 20, preferably 1 to 4 carbon atoms in their N-alkyl radical, such as N,N'-dimethyl-, N,N'-diethyl-, N,N'-di-sec.-pentyl-, N,N'-di-sec.-hexyl-, N,N'-di-sec.-decyl-, N,N'-dicyclohexyl-, and N,N'-di-p-tolyl-,(o-, p- or m-) phenylenediamine; N,N'-dimethyl-, N,N,'-diethyl-, N,N'-diisopropyl-, N,N'-di-sec.-butyl-, and N,N'-dicyclohexyl- 4,4'-diamino-diphenylmethane; and N,N'-di-sec.-butylbenzidine.

Other secondary diamines useful in the invention are the N,N'-dialkyl substituted isophorone diamines. Such compounds have recently been commercialized by Huntsman and designated by the tradenames Jefflink® 754 and Jefflink® 755. Suitable diamines also include 4,4'-methylene bis(n-sec butylaniline), designated PolyLink® 4200 and PolyClear® 136, an aliphatic secondary diamine, both from The Hanson Group.

A particularly preferred group of secondary diamine compounds includes the polyaspartic esters. Suitable polyaspartic esters include those corresponding to the general formula (II): 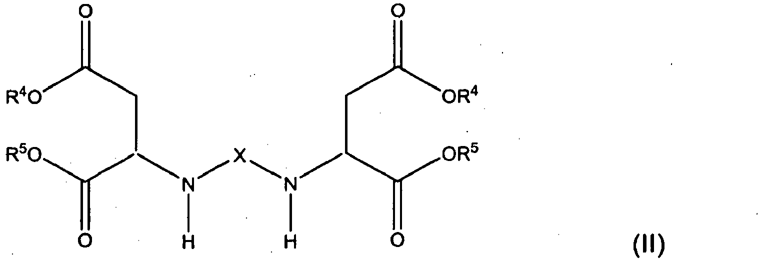 wherein:
X: represents an aliphatic or cycloaliphatic moiety that is inert towards isocyanate groups and is divalent
   and
R⁴ and R⁵: may be identical or different, and each independently represents an organic group which is inert towards isocyanate groups.

In the above structure, X may represent an alkyl moiety containing from 1 to 20 carbon atoms, preferably from 3 to 12 carbon atoms, and that the alkyl radical may be straight chain or branched; or a cycloalkyl radical containing from 6 to 15 carbon atoms. Preferred alkyl and cycloalkyl moieties include, for example, 1,4-butyl, 1,6-hexyl, 2,2,4-trimethyl hexyl, 3,3,5-trimethyl cyclohexane, dicyclohexyl methane.

Also, in the above structure, it is preferred that R⁴ and R⁵ represent methyl and/or ethyl groups.

These polyaspartic esters can be prepared in a known manner as described in, for example, U.S. Patents 5,126,170 and 5,236,741. More specifically, these compounds are prepared by reacting the corresponding primary polyamines which correspond to the general formula:

X-(-NH₂)ₙ

with optionally substituted maleic or fumaric acid esters which correspond to the general formula:
R⁴OOC - CR⁶ = CR⁷ - COOR⁵
in which
X, R⁴, and R⁵: are defined as above;
R⁶ and R⁷: may be identical or different and each may represent organic groups which are inert towards isocyanate groups or each may represent a hydrogen atom;
and
n: represents an integer with a value of at least 2.

Examples of suitable polyamines to be used in preparing the polyaspartic esters include ethylene diamine, 1,2-diaminopropane, 1,4-diaminobutane, 1,6-diaminohexane, 1,5-diamino-2-methylpentane, 2,5-diamino-2,5-dimethylhexane, 2,2,4- and/or 2,4,4-trimethyl-1,6-diamino-hexane, 1,11-diaminoundecane, 1,12-diaminododecane, 1-amino-3,3,5-trimethyl-5-aminomethyl-cyclohexane, 2,4- and/or 2,6-hexahydrotoluene diamine, 2,4'- and/or 4,4'-diamino-dicyclohexyl methane, 3,3'-dimethyl-4,4'-diamino-dicyclohexylmethane. Aromatic polyamines such as, for example, 2,4- and/or 2,6-diaminotoluene and 2,4'-and/or 4,4'-diamino-diphenylmethane are also suitable, but less preferred. It is also possible to use relatively high molecular weight polyether polyamines that contain aliphatically bound primary amino groups such as, for example, the products commercially available under the Jeffamine tradename.

Some examples of optionally substituted maleic acid esters or fumaric acid esters which can be used to form the polyaspartic esters corresponding to the general formula (II) above, include dimethyl, diethyl, and di-n-butyl esters of maleic acid and fumaric acid and the corresponding maleic or fumaric acid esters substituted by methyl in the 2- and/or the 3-position.

These polyaspartic esters can be prepared from the above described starting materials, at a temperature of 0°C to 100°C, by using these starting materials in such proportions that at least 1, and preferably 1, olefinic double bond is present for each primary amino group. Excess starting materials may be removed by distillation after the reaction. The reaction may be carried out solvent-free or in the presence of suitable solvents such as methanol, ethanol, propanol, dioxane and mixtures of such solvents.

The isocyanate reactive component (B) may also optionally comprise (B)(3) one or more hydroxyl-functional compounds selected from the group consisting of polyether polyols, polythioethers, polyesters, polycaprolactones, glycols, polycarbonates, polyacetals, hydroxyl-terminated prepolymers as well as mixtures of these hydroxyl-functional compounds. These hydroxyl-functional organic compounds have an OH functionality of from 2.0 to 3.0 and preferably 2.0. Suitable hydroxylfunctional organic compounds typically have a molecular weight of at least 100, and more preferably at least 200. These hydroxyl-functional organic compounds also typically have a molecular weight of less than or equal to 6,000, preferably less than or equal to 4,000 and most preferably less than or equal to 2,000. Suitable hydroxyl-functional organic compounds may have a molecular weight ranging between any combination of these upper and lower values, inclusive, e.g. from 100 to 6,000, preferably of 200 to 4,000, and most preferably 200 to 2,000. Polyester polyols are preferred. It is most preferred that the hydroxyl-functional compounds comprise polyester polyols that are the reaction product of ε-caprolactone with a glycol.

Examples of glycols and other suitable components for (B)(3) include compounds known to be suitable as low molecular weight chain extenders as well as low molecular weight diols. Some examples include those compounds with molecular weight of 350 or less such as, for example, an alkylene (C₂-₂₂) glycol, e. g., ethylene glycol, propylene glycol, 1,4-butylene glycol, 1,3-butylene glycol, 1,2-butylene glycol, 1,6-hexanediol, 2-methyl-1,3-propanediol, 2,2,4-trimethylpentane-1,3-diol, neopentyl glycol, 1,10-dodecanediol; poly(alkylene(C₂-₁₅) glycol), e.g., diethylene glycol, triethylene glycol, tetraethylene glycol, dipropylene glycol, tripropylene glycol; polytetramethylene glycol-250, other glycols such as cyclohexane dimethanol, hydrogenated bisphenol A, 1,4-dihydroxy-2-butene, 2,6-dimethyl-1-octene-3,8-diol, hydroquinone bis(2-hydroxy-ethyl)ether, resorcinol bis(2-hydroxyethyl)ether, bishydroxyethylene terephthalate; low molecular weight triols with molecular weight of 350 or less such as glycerin, 2-methyl-2-hydroxy-methyl-1,3-propane-diol, 2,4-dihydroxy-3-hydroxymethyl-pentane, 1,2,6-hexanetriol, 1,1,1-tris(hydroxymethyl)propane, 2,2-bis(hydroxylmethyl)-3-butanol and other aliphatic triols (C₈-₂₀) as well as mixtures thereof. It is also possible that mixtures of the above mentioned compounds with small amounts of monofunctional and/or higher-functional compounds can be used as component (B)(3) provided that the above functionality and molecular weight requirements are satisfied.

Suitable polyester polyols may, for example, be prepared from organic dicarboxylic acids having from 2 to 12 carbon atoms, preferably aliphatic dicarboxylic acids having from 4 to 6 carbon atoms, and polyhydric alcohols, preferably diols, having from 2 to 12 carbon atoms, preferably from 2 to 6 carbon atoms. Examples of possible dicarboxylic acids are: succinic acid, glutaric acid, adipic acid, suberic acid, azelaic acid, sebacic acid, decanedicarboxylic acid, maleic acid, fumaric acid, phthalic acid, isophthalic acid and terephthalic acid. These dicarboxylic acids may be used individually or else in a mixture with one another. Instead of the free dicarboxylic acids, it is also possible to use the corresponding dicarboxylic acid derivatives, such as esters of dicarboxylic acids with alcohols having from 1 to 4 carbon atoms, or anhydrides of dicarboxylic acids. Examples of di- and polyhydric alcohols are: ethanediol, diethylene glycol, 1,2- and 1,3-propanediol, dipropylene glycol, 1,4-butanediol, 1,5-pentanediol, 1,6-hexanediol, 1,10-decanediol, 1,12-dodecanediol, glycerol and trimethylolpropane. In accordance with the present invention, it is preferred to use polyester polyols made from lactones, e. g. ε -caprolactone or hydroxycarboxylic acids, e.g. omega-hydroxycaproic acid. These and other suitable lactones are typically reacted with a glycol (e.g. a diol such as 1,-4-butane diol or 1,6-hexanediol) to form a polyester polyol. Preferred polyester polyols for the production of optically clear polyurethane ureas according to the present invention include those polyesters which do not have a tendency to crystallize.

To prepare the polyester polyols, the organic, e.g. aromatic and preferably aliphatic, polycarboxylic acids and/or derivatives of these and polyhydric alcohols may be polycondensed without a catalyst or preferably in the presence of esterification catalysts, usefully in an atmosphere of inert gas, e.g. nitrogen, carbon monoxide, helium, argon, in the melt at from 150 to 250°C, preferably from 180 to 220°C, if desired under reduced pressure, as far as the desired acid number, which is advantageously less than 10, preferably less than 2. In a preferred embodiment, the esterification mixture is polycondensed to an acid number of from 80 to 30, preferably from 40 to 30, under atmospheric pressure and then under a pressure of less than 500 mbar, preferably from 50 to 150 mbar. Examples of possible esterification catalysts are catalysts using iron, cadmium, cobalt, lead, zinc, antimony, magnesium, titanium or tin, in the form of metals, metal oxides or metal salts. However, the polycondensation may also be carried out in a liquid phase in the presence of diluents and/or carriers, such as benzene, toluene, xylene or chlorobenzene for azeotropic removal of the water of condensation by distillation.

Also suitable compounds to be used as the hydroxyl-functional compounds are polycarbonate polyols. Suitable polycarbonate polyols include those obtained by a ring-opening polymerization of ethylene carbonate using the low molecular weight diols and low molecular weight triols as an initiator; and natural polyols such as castor oil and/or soy oil; polyolefin polyols such as polybutadiene polyol and polyisoprene polyol and hydrated products thereof. These may be used alone or as mixtures of two or more of them.

Other suitable hydroxyl-functional compounds include polycarbonate diols, which may be obtained by reacting diphenyl- or dimethyl-carbonate with low molecular weight diols or triols, ε -caprolactone-modified diols or triols of the type mentioned above.

Hydroxyl-terminated prepolymers suitable for use as component (B)(3) of the present invention include, for example, those which are prepared by reacting conventional hydroxyl-group containing compounds such as, for example, diols, polyether diols and polyols, polyester diols and polyols, and/or caprolactone diols and polyols, with a (cyclo)aliphatic diisocyanate or polyisocyanate. Suitable (cyclo)aliphatic diisocyanates and polyisocyanates include those which are described above as being suitable for component (A)(1). The quantities of the hydroxyl-group containing compound to the isocyanate group containing compound is such that there is an excess of hydroxyl groups to isocyanate groups. Typically, the relative quantities are such that in the final product there are from 3 to 8 hydroxyl groups per isocyanate group, and preferably from 3 to 5 hydroxyl groups per isocyanate group.

Other suitable polyesters, polythioethers, polyacetals, polycarbonates and other polyhydroxyl compounds which may be used in accordance with the invention may be found, for example, in High Polymers, Volume XVI, "Polyurethanes, Chemistry and Technology," by Saunders-Frisch, Interscience Publishers, New York, London, Vol. I, 1962, pages 32-42 and 44-54, and Volume II, 1964, pages 5-6 and 198-199; and in Kunststoff-Handbuch, Vol. VII, Vieweg-Hochtlen, Carl Hanser Verlag, Munich, 1966, pages 45-71.

The polyethers suitable for use in accordance with the invention are known and may be obtained, for example, by polymerizing tetrahydrofuran or epoxides such as, for example, ethylene oxide, propylene oxide, butylene oxide, styrene oxide or epichlorohydrin in the presence of suitable catalysts, such as, for example, BF₃ or KOH, or by chemically adding these epoxides, preferably ethylene oxide and propylene oxide, in admixture or successively to components containing reactive hydrogen atoms such as water, alcohols or amines. Suitable initiator compounds which can be alkoxylated to form component (B)(3) in the present invention include, for example, the low molecular weight chain extenders, ethylene glycol, propylene glycol, diethylene glycol, dipropylene glycol, butyl carbitol, butanediol, pentanediol, bisphenol A, neopentyl glycol, trimethyl pentanediol, cyclohexane dimethanol, trimethylol propane. Mixtures of suitable initiator compounds can also be used provided that the functionality of the resultant polyol mixture is at least 2.0.

Suitable polyethers include, for example, those compounds based on di-functional starters such as, for example, water, ethylene glycol, propylene glycol. These compounds include copolymers of ethylene oxide and propylene oxide.

Another suitable group of polyethers includes polyoxyalkylene polyols, and particularly, the low unsaturation (low monol) poly(oxypropylene/oxy-ethylene) polyols manufactured with double metal cyanide catalyst. The poly(oxypropylene/oxyethylene) low unsaturation polyols as herein defined are prepared by oxyalkylating a suitably hydric initiator compound with propylene oxide and ethylene oxide in the presence of a double metal cyanide catalyst. Preferably, double metal cyanide complex catalysts such as those disclosed in U.S. Patents 5,158,922 and 5,470,813 are used. Particularly preferred polyols include the random poly(oxypropylene/oxy-ethylene) polyols having low unsaturation as described herein, for example, U.S. Patent 5,605,939, the disclosure of which is hereby incorporated by reference. The amount of ethylene oxide in the ethylene oxide/propylene oxide mixture may be increased during the latter stages of the polymerization to increase the primary hydroxyl content of the polyol. Alternatively, the low unsaturation polyol may be capped with ethylene oxide using non-DMC catalysts. Of course, it is necessary here to observe the above described limits for ethylene oxide content in the resultant polyether polyols.

When the oxyalkylation is performed in the presence of double metal cyanide catalysts, it is preferable that initiator molecules containing strongly basic groups such as primary and secondary amines be avoided. Further, when employing double metal cyanide complex catalysts, it is generally desirable to oxyalkylate an oligomer which comprises a previously oxyalkylated "monomeric" initiator molecule. It has been found, particularly with vicinal hydroxyl groups, that DMC oxyalkylation is initially slow and may be preceded by a considerable "induction period" where essentially no oxyalkylation takes place. Use of a polyoxyalkylene oligomer having an hydroxyl number greater than 600 has been found to mitigate these effects. The polyoxyalkylene oligomeric initiators may be prepared by oxyalkylating a "monomeric" initiator in the presence of traditional basic catalysts such as sodium or potassium hydroxide or other non-DMC catalysts. It is typically necessary to neutralize and/or remove these basic catalysts prior to addition and initiation of the DMC catalyst.

Suitable catalysts (C) include organic metal compounds, especially organic tin compounds, organic bismuth compounds, and organic tin-sulfur compounds. Suitable organic tin compounds include preferably those which contain sulfur atoms, such as dioctyl tin mercaptide (German Auslegeschrift 1,769,367 and U.S. Pat. No. 3,645,927), and, preferably, tin(II) salts of carboxylic acids, such as tin(II) acetate, tin(II) octoate, tin(II) ethylhexoate, and tin(II) laurate, as well as tin(IV) compounds. Some examples of suitable tin catalysts include compounds such as, for example, dimethyltin carboxylates such as, for example, dimethyltin dilaurate, dibutyltin dilaurate, dibutyltin dichloride, dibutyltin diacetate, dibutyltin maleate, dibutyltin oxide, and dioctyltin diacetate. The preferred organometallic catalyst comprises a tin(IV) catalyst comprising dibutyltin dilaurate, dimethyltin dilaurate, or mixtures thereof.

Suitable catalysts to be used also include, for example, tertiary amine catalysts such as, for example, triethylamine, triethylenediamine, tributylamine, N-methyl-morpholine, N-ethylmorpholine, triethanolamine, triisopropanol-amine, N-methyldiethanol-mine, N-ethyldiethanolamine, and N,N-dimethylethanol-amine.

Other catalysts that may be employed, but are less preferred are the salts of cobalt, mercury, bismuth and zinc, which contain organic ligands. Suitable bismuth compounds include, for example, bismuth neodecanoate, bismuth versalate, and various bismuth carboxylates known in the art.

Any of the above-mentioned catalysts may, of course, be used as mixtures. Further representatives of catalysts to be used according to the invention and details concerning their mode of action are described in Kunststoff Handbuch, Volume VII, published by Vieweg and Huchtlen, Carl Hanser Verlag, Munich, 1966, for example, on pages 96 to 102.

The catalyst is typically used in a quantity ranging from 0.001 to 5%, preferably from 0.0015 to 2% by weight, based on 100% by weight of the total system. The catalyst is preferably added to the polyisocyanate or the polyisocyanate prepolymer at the time of processing.

In addition, various additives may also be present in the reaction such as, for example, surface-active additives such as air-release agents, defoamers, and other additives such as anti-oxidants, ultraviolet (UV) stabilizers, flame retarding agents, plasticizers, antioxidants, adhesion promoters, dyes, viscosity depressants, color blockers, optical brighteners, internal mold release agents known to be useful in polyurethane chemistry. Suitable antioxidants include multifunctional hindered phenols such as, for example, Irganox 245, Irganox 1010, Irganox 1135. Suitable UV stabilizers include, for example, benzotriazoles and hindered amine light stabilizers. Specific examples include Tinuvin 328, Tinuvin 765, Cyasorb 3604, Cyasorb 5411 and Cyasorb 5411. Formamidines such as Givsorb UV-1 may also be employed. However, any of the known antioxidants and/or UV stabilizers may be used. If a stabilizer selected from the group consisting of antioxidants, UV-stabilizers, hindered amine light stabilizers, and mixtures thereof is present, it maybe added to either the polyisocyanate prepolymer or to the isocyanate-reactive component. Specific advantages, particularly with regard to weathering, have been found in reaction mixtures which contain antioxidants and/or UV stabilizers.

Other additives which may be used in the process according to the present invention include, but are not limited to, surface-active additives, defoamers and air-release agents. Suitable air release agents or defoamers may be either silicone based or non-silicones. The preferred defoamers are those that do not affect the clarity of the product. Alkali metal or ammonium salts of sulfonic acid such as dodecyl benzene sulfonic acid or dinaphthyl methane sulfonic acid and also fatty acids may also be used as surface-active additives.

In addition, internal mold release agents may or may not be used in accordance with the present invention. Suitable internal mold release agents include, for example, those which are known to be suitable for polyurethane and/or polyurea systems, including, for example, metallic stearates such as, for example, zinc stearate, N-stearyl-N',N'-bis-hydroxyethyl urea, oleyl polyoxyethylene amide, stearyl diethanol amide, isostearyl diethanolamide, polyoxyethylene glycol monoleate, a pentaerythritol/adipic acid/oleic acid ester, a hydroxy ethyl imidazole derivative of oleic acid, N-stearyl propylene diamine and the sodium salts of castor oil sulfonates or of fatty acids. Other internal mold release agents include, for example, various proprietary blends and formulations which are commercially available as Axel INT-1685/OG and AXEL INT-1681/OG from Axel Plastics. Axel INT-1685-OG is a preferred internal mold release agent. Other internal mold release agents such as those based on fluorine may also be employed. Examples of these include those which are commercially available from DuPont under the trade name Zonyl.

In accordance with the present invention, when an internal mold release agent is included, it is preferred that the internal mold release agent does not have a detrimental affect on optical clarity of the resultant part. It is also preferred that the maximum transmittance is attained while simultaneously maintaining very low haze in the resultant parts. Due to differences in chemistry resulting from the selection of the isocyanates/isocyanate prepolymers, primary and secondary amine components, and, optionally, hydroxyl containing components, as well as the relative amounts of components, which component the internal mold release agent is added to (i.e. isocyanate or isocyanate-reactive component), different internal mold release agents may work better for one system than another. This is, however, readily determined by one of ordinary skill in the art.

When using the polyurethane-ureas of the present invention for end-use applications in which optical clarity is important such as, for example, prescription lenses, it is generally necessary that the materials have a transmittance greater than or equal to 90%.

In accordance with the present invention, it is preferred that the various additives are included in the isocyanate component and/or the isocyanate-reactive component by means of suitable additive packages as described herein below. These additive packages as described herein provide a package of additives in various amounts that are preferably included in the isocyanate or prepolymer component, and a separate package of additives in various amounts that are preferably included in the isocyanate-reactive component. The ranges for additives in these packages as set forth below are given in % by weight, based on 100% by weight of the total system. By total system, it is meant the total weight of the isocyanate component and the stoichiometrically required amount of the isocyanate-reactive component to achieve a specified isocyanate index within the ranges given herein. Suitable ranges for the isocyanate index are from 95 to 110, and preferably from 100 to 105.

Suitable ranges for the additive package used in combination with the isocyanate component in one embodiment of the present invention are as follows:

| | Broad Range: | Preferred Range: |
|---|---|---|
| Catalyst | 0.0010 to 5.0 | 0.0015 to 2.0 |
| Stabilizer | 0.5 to 10.0 | 1.0 to 6.0 |
| Mold Release | 0 to 2.0 | 0 to 1.0 |
| Defoamer | 0.2 to 2.0 | 0.2 to 1.0 |
| Brightener | 0.0001 to 0.002 | 0.0001 to 0.0005 |

As used herein, stabilizer refers to one or more UV stabilizers that may be used synergistically. For example, a combination of benzotriazole or formamidine and a hindered amine light stabilizer may be employed.

Suitable ranges for additives for the package used in combination with the isocyanate reactive component in one embodiment of the present invention are as follows:

| | Broad Range: | Preferred Range: |
|---|---|---|
| Antioxidant | 0.1 to 5.0 | 1.0 to 3.0 |
| Defoamer | 0.2 to 2.0 | 0.2 to 1.0 |
| Brightener | 0.0001 to 0.001 | 0.0001 to 0.0005 |

In the one-stage (or "one-shot") method, the isocyanate reactive component as well as any additives and auxiliaries are typically combined and thoroughly blended in a premix. The liquid polyisocyanate or polyisocyanate prepolymer (A) is then mixed with the premix in a container by agitation or in the mixhead of a low-pressure, meter-mix machine. External release agents, such as silicone oils, or the commercially available RainX which is useful for glass molds, are often applied to the mold surface prior to the molding process. It is, however, also possible to use both the so-called "internal release agents", and external release agents.

The reactants are used in quantities such that the Isocyanate Index is from 95 to 110, preferably from 100 to 105. By "isocyanate index" is meant the quotient of the number of isocyanate groups divided by the number of isocyanate-reactive groups, multiplied by 100.

The polyurethane-urea materials of the present invention are prepared in open or closed molds maintained at temperatures of 25°C to 80°C, preferably from 25°C to 65°C. The gel time for the one-shot process of the present invention is preferably greater than 2 minutes. These materials may be hand-cast or machine cast. The resultant solid polyurethane-ureas of the invention may be demolded after an initial green cure at 110°C for 2-4 hours, and subsequently post-cured at 110°C for 16 hours. Green Cure Time as used herein is defined as the time required for the solid polyurethane-urea to acquire sufficient physical and mechanical integrity to enable demolding. Optimum physical properties of these polyurethane-ureas are obtained by then continuing the postcure at 110°C for 16 hours. These solid polyurethane-ureas exhibit very good dimensional stability at elevated temperature and do not show "creep" even in the lower hardness range.

The optically clear, solid light-stable polyurethane-ureas obtainable by the novel process may be used as a glass substitute, for example as sun roofs, front windows, back windows or side windows in automotive or aircraft construction and/or as lamp covers, for example as front lamps or rear lamps in aircraft or automotive construction. The solid optically-clear polyurethane-ureas prepared according to the invention may preferably be used, for example, in optical applications such as lenses for ophthalmic lenses and lens blanks for eyeglasses, sunglasses and safety glasses, visors, goggles, shaped masks, and security glass.

The following examples further illustrate details for the preparation and use of the compositions of this invention. The invention, which is set forth in the foregoing disclosure, is not to be limited either in spirit or scope by these examples. Those skilled in the art will readily understand that known variations of the conditions of the following procedures can be used. Unless otherwise noted, all temperatures are degrees Celsius, and all parts and percentages are parts by weight and percentages by weight, respectively.

### EXAMPLES

| | |
|---|---|
| ISO A: | dicyclohexylmethane-4,4'-diisocyanate which contains 20% of the trans, trans isomer |
| PREPOLYMER A: | an isocyanate prepolymer having an NCO group content of 20%, a functionality of 2.0 and a viscosity of 2650 cP at 25°C and comprising the reaction product of 74.0% by weight of ISO A, 8.4% by weight of Polyol A, 8.0% of Polyol B, 6.3% by weight of Polyol C and 0.7% of Polyol J and 0.04% of Catalyst A |
| PREPOLYMER B: | an isocyanate prepolymer having an isocyanate group content of 20%, a functionality of 2.0 and a viscosity of 717 cP at 25°C and comprising the reaction product of 70% by weight of ISO A and 30% of Polyol D |
| PREPOLYMER C: | an isocyanate prepolymer having an NCO group content of 18.3%, a functionality of 2.0, and a viscosity of 800 cP at 25°C and comprising the reaction product of 67% by weight of ISO A and 33% of Polyol G and 0.002% by weight of Catalyst A |
| PREPOLYMER D: | an isocyanate prepolymer having an NCO group content of 26.0%, a functionality of 2.0 - 2.5 and a viscosity of 280 cP at 25°C and comprising the reaction product of 92.6% by weight of ISO A and 7.4% by weight of Polyol E and 0.0025% by weight of Catalyst A |
| PREPOLYMER E: | an isocyanate prepolymer having an NCO group content of 18%, a functionality of 2, and a viscosity of 550 cP at 25°C and comprising the reaction product of 62% by weight of ISO A and 38% of Polyol I and 0.3% by weight of Catalyst B |
| PREPOLYMER F: | an isocyanate prepolymer having an NCO group content of 19%, a functionality of 2.0 and a viscosity of 1400 cP at 25°C and comprising the reaction product of 64% of ISO A and 36% of Polyol F and 0.005% of Catalyst B |
| PREPOLYMER G: | an isocyanate prepolymer having an NCO group content of 4%, a functionality of 2.0, and a viscosity of 50,230 cP at 25°C and comprising the reaction product of 23% of ISO A and 75% of Polyol H and 0.01% of Catalyst B |
| PREPOLYMER | H: an isocyanate prepolymer having an NCO group content of 7.5%. a functionality of 2.0, and a viscosity of 3240 cP at 25°C and comprising the reaction product of 32% of ISO A and 68% of Polyol I and 0.012% of Catalyst B |
| Polyol A: | a polycaprolactone polyester polyol having a MW = 400 and a functionality of 2.0; described as a polymer of 2-oxepanone with 1,6-hexanediol (CAS RN = 36609-29-7) |
| Polyol B: | a polycaprolactone polyester polyol having a MW = 750 and a functionality of 2.0; described as a polymer of 2-oxepanone with 1,6-hexanediol (CAS RN = 36609-29-7) |
| Polvol C: | a polycaprolactone polyester polyol having a MW = 4000 and a functionality of 2.0; described as a polymer of 2-oxepanone with 1,4-butanediol (CAS RN = 31831-53-5) |
| Polyol D: | a polycaprolactone polyester polyol having a MW = 1000 and a functionality of 2.0; described as a polymer of 2-oxapanone with neopentyl glycol (CAS RN = 69089-45-8) |
| Polvol E: | a polyalkylene polyol having an equivalent weight of 100, an OH# of 550, and a functionality of 3, and prepared by adding propylene oxide to trimethylol propane such that all of the hydroxyl groups are secondary |
| Polyol F: | a polyethylenebutylene adipate polyester having a MW = 2000 and a functionality of 2.0; described as a co-polymer of ethylene glycol, 1,4-butane diol and adipic acid (CAS RN = 26570-73-0) |
| Polyol G: | polytetramethylene ether glycol, a difunctional polyol having an equivalent weight of 500 and commercially available as Terathane-1000 from Invista Chemical and as poly-THF 1000 from BASF |
| Polyol H: | polytetramethylene ether glycol, a difunctional polyol having an equivalent weight of 1000 and commercially available as Terathane-2000 from Invista Chemical and as poly-THF 2000 from BASF |
| Polyol I: | a polyoxyalkylene polyol having an equivalent weight of 1000, an OH number of 56, and a functionality of 2, and prepared by adding propylene oxide to propylene glycol such that all of the hydroxyl groups are secondary |
| Polyol J: | trimethylolpropane, a chain extender with a MW of 134 and a functionality of 3 |
| Primary Amine A: | 3,5-diethyl-2,4-diamino toluene, an aromatic diamine chain extender having a MW = 178 and a functionality of 2.0, comprising of 80% by weight of the 2,4-isomer and 20% by weight of the 2,6-isomer, commercially available from Albemarle Corporation |
| Sec. Amine A: | bis(4,4'-di-secbutylaminophenyl)methane, an aromatic secondary diamine chain extender having a MW = 310 and a functionality of 2.0 commercially available from The Hanson Group, LLC |
| Sec. Amine B: | an aliphatic secondary diamine extender with a MW = 272 and a functionality of 2.0 commercially available from The Hanson Group, LLC |
| Sec. Amine C: | an aliphatic secondary diamine with a MW = 560 and |
| | a functionality of 2.0, described as an addition product of diethyl maleate and bis(p-aminocyclohexyl)methane, having a viscosity of 70cp, commercially available from Bayer MaterialScience |
| Sec. Amine D: | an aliphatic secondary diamine with a MW = 580 and a functionality of 2.0, described as an addition product of diethyl maleate and bis(4-amino-3-methylcyclohexyl)methane, having a viscosity of 1000 cP, and commercially available from Bayer MaterialScience |
| Stabilizer A : | bis(1,2,2,6,6-pentamethyl-4-piperidinyl)sebacate; a hindered amine light stabilizer commercially available from Ciba Specialty Chemicals as Tinuvin 765 (CAS RN = 41556-26-7) |
| Stabilizer B: | N²-(4-ethoxycarbonylphenyl)-N¹-methyl-phenylform-amidine, a UV stabilizer commercially available from Vigon International as Givsorb UV-1 (CAS RN = 57834-33-0) |
| Defoamer A: | 1,4-diisobutyl-1,4-dimethylbutynediol, a defoamer commercially available from Air Products as Surfynol TG (CAS RN = 126-86-3) |
| Anti-oxidant A: | isooctyl ester of 3,5-bis(1,1-dimethyl-ethyl-4-hydroxybenzenepropanoic acid; a stabilizer commercially available from Ciba Specialty Chemicals as Irganox 1135 (CAS RN = 125643-61-0) |
| Briqhtener A: | 2,2'-(2,5-thiophenediyl)bis[5-tert-butylbenzoxazole]; an optical brightener commercially available from Ciba Specialty Chemicals as Uvitex OB (CAS RN = 7128-64-5) |
| Brightener B: | an optical brightener commercially available from Exciton Inc. as Exalite Blue 78-13 |
| Mold Release A: | an internal mold release agent and lubricant described as a proprietary formulation containing synthetic resins and organic acid derivatives, commercially available from Axel Plastics as Axel INT-1681/OG |
| Catalyst A: | dimethybis[(1-oxoneodecyl)oxyl]stannane, a tin catalyst commercially available from GE Silicones as Fomrez UL-28 (CAS RN = 68928-76-7) |
| Catalyst B: | dibutyltin dilaurate, commercially available from Air Products & Chemicals as Dabco T-12 |

### General Procedure for Preparation of Prepolymers:

An amount of ISO A required to produce the desired isocyanate group content was charged to a one-gallon flask equipped with a stirrer and an outlet for vacuum degassing. The required amount of catalyst (see formula for Isocyanate Component) was then added to the reactor. The isocyanate was stirred and heated to 70-80°C. Calculated amounts of premelted isocyanate-reactive components (i.e. polyethers or polyesters as shown in formula for Isocyanate Component) were then added to the reactor at such a rate that the temperature of the reacting mixture did not exceed 80°C. After addition of the isocyanate-reactive components was completed, accurate amounts of the remaining additives were added to the reactor. The reaction mixture was then degassed under continuous stirring at 80 ± 5°C for a period of 3-4 hours as required to achieve the desired isocyanate content.

In addition to the compositional information shown in Tables 1A and 1 B for each isocyanate/prepolymer component, suitable ranges for additives to be included in the isocyanate/prepolymer component of the present invention are provided in the specification. The following is a particularly preferred additive package for a prepolymer composition of the invention herein. This particular formula (i.e. Isocyanate Component) corresponds to Prepolymer A which was used in some examples. As shown in Table 1A, Prepolymer A contains only the isocyanate and polyol components of the prepolymer. The pbw's for the components of prepolymers in Tables 1A and 1 B have been normalized to 100%. The pbw's shown below (in Isocyanate Component) for these components of the prepolymer also include the additive package that is added to the base Prepolymer A in Table 1A.

| Isocyanate Component | PBW |
|---|---|
| ISO A | 73.93 |
| Polyol A | 8.41 |
| Polyol B | 7.79 |
| Polyol C | 6.30 |
| Polyol J | 0.71 |
| Catalyst A | 0.04 |
| Stabilizer B | 1.17 |
| Stabilizer A | 1.17 |
| Mold Release A | 0.23 |
| Defoamer A | 0.24 |
| Brightener B | 0.00023 |
| Brightener A | 0.000306 |

**Table 1A: Prepolymer Compositions A Through D**

| Prepolymer | Prepolymer A | Prepolymer B | Prepolymer C | Prepolymer D |
|---|---|---|---|---|
| ISO A | 76.11 | 70.61 | 67.0 | 92.63 |
| Polyol A | 8.66 | | | |
| Polyol B | 8.02 | | | |
| Polyol C | 6.48 | | | |
| Polyol D | | 29.39 | | |
| Polyol E | | | | 7.37 |
| Polyol G | | | 33.0 | |
| Polyol J | 0.73 | | | |
| % NCO | 20.85 | 20.17 | 18.71 | 26.60 |
| NCO:OH Equivalent Ratio | 6.89:1.0 | 9.17:1.0 | 7.75:1.0 | 9.59:1.0 |

**Table 1 B: Prepolymer Compositions E Through H**

| Prepolymer | Prepolymer E | Prepolymer F | Prepolymer G | Prepolymer H |
|---|---|---|---|---|
| ISO A | 62.0 | 64 | 23.78 | 32.15 |
| Polyol F | | 36 | | |
| Polyol H | | | 76.22 | |
| Polyol I | 38 | | | 67.85 |
| % NCO | 18.7 | 19.0 | 4.4 | 7.46 |
| NCO:OH Equivalent Ratio | 12.45:1.0 | 13.57:1.0 | 2.38:1.0 | 3.62:1.0 |

### General Procedure for Preparation of Polyol Compositions:

Under a continuous stream of dry nitrogen, a three-necked flask was charged with required amounts of (i) hydroxy functional polyol (polyether or polyester), (ii) primary aromatic diamine component, (iii) secondary diamine component, (iv) defoamer, (v) antioxidant and (vi) brightener. The blend was kept stirred and degassed at 60°C until it was completely free of air. Vacuum was broken with dry nitrogen and material transferred to dry containers and blanketed with dry nitrogen. These blends were then reacted with the isocyanates and isocyanate prepolymers to form polyurethane-ureas. These polyol compositions are shown in Tables 2A and 2B.

In addition to the compositional information shown in Tables 2A and 2B for each polyol blend, suitable ranges for additives to be included in the polyol blends suitable for the present invention are provided in the specification. As with the isocyanate/prepolymer component, there is a preferred additive package for the polyol blends of the present invention. The following is a particularly preferred additive package for polyol blends of the invention herein. This particular polyol blend corresponds to Polyol Blend B which was used in some of the examples. As shown in Table 2A, Polyol Blend B contains only the isocyanate-reactive components of the polyol blend. The pbw's for the isocyanate-reactive components of the polyol blends shown in Tables 2A and 2B have been normalized to 100%. The pbw's shown below for the isocyanate-reactive components of the polyol blend include the additive package added to base Polyol Blend B in Table 2.

The following additives were included in each Polyol Blend B:

| Polyol Blend Component | PBW |
|---|---|
| Polyol A | 44.1 |
| Primary Amine A | 53.1 |
| Sec. Amine C | 2.0 |
| Antioxidant A | 0.4 |
| Defoamer A | 0.4 |
| Brightener B | 0.00023 |

**Table 2A: Polyol Blends A Through E**

| Polyol Blends | Polyol Blend A* | Polyol Blend B | Polyol Blend C | Polyol Blend D | Polyol Blend E |
|---|---|---|---|---|---|
| Polyol A | 45.45 | 44.45 | 44.45 | 42.93 | 42.93 |
| Primary Amine A | 54.55 | 53.53 | 53.53 | 52.02 | 52.02 |
| Sec. Amine C | | 2.02 | | 5.05 | |
| Sec. Amine D | | | 2.02 | | 5.05 |

| | | | | | |
|---|---|---|---|---|---|
| * comparative | | | | | |

**Table 2B: Polyol Blends F Through J**

| Polyol Blends | Polyol Blend F | Polyol Blend G | Polyol Blend H | Polyol Blend I* | Polyol Blend J |
|---|---|---|---|---|---|
| Polyol A | 44.45 | 44.45 | | | |
| Primary Amine A | 53.53 | 53.53 | 89.68 | 100 | 10 |
| Sec. Amine C | | | 10.32 | | 90 |
| Sec. Amine A | 2.02 | | | | |
| Sec. Amine B | | 2.02 | | | |

| | | | | | |
|---|---|---|---|---|---|
| * comparative | | | | | |

### General Procedure for Preparation of Solid Polyurethane-Ureas:

All castings were made at an isocyanate to polyol/amine index of 105. Hand castings were made by batch mixing stoichiometric amounts of the isocyanate and isocyanate reactive components on a Hauschild High Speed Mixer DAC400FV from FlackTek Inc. at mixing speeds of 1000-1600 RPM for 10-40 seconds and pouring into suitable molds. All examples from Tables 3A and 3B were hand cast. Machine castings with continuous pour capability were made on a Max Machine which has the capability to degas in the re-circulation mode. Of the Examples shown in Tables 3A and 3B, only Examples 1 and 2 were also processed on the Max machine. However, all results reported in Tables 3A and 3B are for the hand cast molds which were prepared using the Hauschild High Speed Mixer to mix the two components as described above.

### Hand Castings:

Calculated amounts of the Isocyanate component and the polyol/amine or amine component were separately degassed at 25°C until completely free of dissolved air. A stoichiometric amount of the polyol/amine component was added to the isocyanate component, the container closed and placed in the High Speed Mixer. After high speed stirring for 10-40 seconds to homogenously mix the two components, the container was removed from the mixer, the lid removed and the reacting clear liquid mixture poured into either an open or closed, reinforced glass mold. The mold sizes varied, with most being either 38.7 cm (6") square or 77.4 cm (12") square. In general, they were maintained at 25°C, but they may be warmed if needed to a temperature of, for example, 65°C. If a mold release agent was used, the mold release agent was applied before heating. In addition, any mold release agent used should be optically-clear, if the resultant parts are for optical applications. Once the mold was filled, it was placed in a convection oven at 110°C for a period of time (see Table 3A and Table 3B) after which the part was easily demoldable. The demolded parts were then post-cured at 110°C for 16 hours in an electric convection oven.

### Machine Castings:

Isocyanate and Polyol components were charged to the day tanks on the machine and degassed thoroughly in the re-circulation mode until all the dissolved air was removed. The isocyanate component was maintained at a temperature of 32 to 45°C while the polyol component was maintained at (25-30°C). The RPM's on the isocyanate and polyol pumps were adjusted to dispense accurate amounts of Isocyanate and polyol for an index of 105. The mix ratio was checked with the machine in the calibration mode. The machine was switched to the pour mode and parts produced by pouring the reaction mixture into either open or closed, glass molds. Typical mold sizes were also 38.7 cm (6") square or 77.4 (12") square. As in Hand Casting, demolding was typically after 2-3 hours (see Table 3A and Table 3B). Parts were then post-cured at 110°C for 16 hours in an electric convection oven.

**Table 3A: Solid Polyurethanes from Prepolymers A and H with Polyol Blends A Through I**

| Solid Polyurethane Urea | Example 1 * | Example 2 | Example 3 | Example 4 | Example 5 | Example 6 | Example 7 |
|---|---|---|---|---|---|---|---|
| Polyol Blend/pbw | Blend A / 100 | Blend B / 100 | Blend C / 100 | Blend D/100 | Blend E/100 | Blend F / 100 | Blend G/100 |
| Prepolymer/pbw | A / 178 | A / 176 | A / 176 | A / 173 | A / 173 | A / 184 | A / 186 |
| **Stoichiometry:** | | | | | | | |
| Equivalent Ratio of NH₂:NCO | 0.695:1.0 | 0.689:1.0 | 0.69:1.0 | 0.681:1.0 | 0.682:1.0 | 0.685:1.0 | 0.683:1.0 |
| **Processing:** | | | | | | | |
| Gel Time, min:sec | 1:00 | 1:20 | 1:25 | 2:00 | 2:06 | 1:35 | 1:35 |
| Demold Time (hr) | 16 | 2 | 2 | 2 | 2 | 0:30 | 4:00 |
| **Properties:** | | | | | | | |
| Shore Hardness | 80D | 77D | 77D | 79D | 79D | 79D | 81D |
| % Elongation | 33 | 28.4 | 37.8 | 8.9 | 3.2 | 7.4 | 2.9 |
| Tensile Str (psi) (MPa) | (8578) 59.14 | (8883) 61.25 | (8972) 61.86 | (8157) 56.24 | (6725) 46.37 | (5642) 38.90 | (5523) 38.08 |
| Flex. Mod. (psi) (MPa) | (236,100) 1627.85 | (240,600) 1658.88 | (244,000 1682.32 | (227,500) 1568.56 | (198,300) 1367.23 | (238,700) 1645.78 | (249,300) 1718.86 |
| Izod Impact (ftlb.in) / (J/m) | (1.172) / 62.56 | (1.185) / 63.26 | (1.292) / 68.97 | (1.248) / 66.62 | (1.084) / 57.86 | (2.3) / 122.77 | (3.8) / 202.84 |
| % Transmittance | 77 | 89 | 66.5 | 89 | 67.1 | 83 | 85 |
| % Haze | 2.0 | 1.1 | 4.6 | 6.1 | 6.2 | 2.8 | 5.2 |
| Sample Thickness (inches) / (cm) | (0.125") / 0.3175 | (0.125") / 0.3175 | (0.125")/ 0.3175 | (0.125") / 0.3175 | (0.125") / 0.3175 | (0.125") I 0.3175 | (0.125") / 0.3175 |
| Appearance | Clear | Clear | Clear | Clear | Clear | Clear | Clear |

| | | | | | | | |
|---|---|---|---|---|---|---|---|
| * comparative | | | | | | | |

**Table 3B: Solid Polyurethanes from Prepolymers A and C Through H with Polyol Blends B, H and I**

| Solid Polyurethane Urea | Example 8 | Example 9 | Example 10 | Example 11 | Example 12 | Example 13 | Example 14 | Example 15 ** |
|---|---|---|---|---|---|---|---|---|
| Polyol Blend/pbw | Blend B / 100 | Blend B / 100 | Blend B/100 | Blend B / 100 | Blend J / 100 | Blend H/ 100 | Blend H/ 100 | Blend I / 100 |
| Prepolymer/pbw | B /180.37 | E / 199 | C/198.6 | F/193.45 | D/73.5 | G/ 1152 | H/ 657.28 | H / 708 |
| Stoichiometry: | | | | | | | | |
| Equivalent Ratio of NH₂:NCO | 0.688:1.0 | 0.683:1.0 | 0.681:1.0 | 0.684:1.0 | 0.246:1.0 | 0.92:1.0 | 0.92:1.0 | 0.95:1.0 |

| **Processing:** | | | | | | | | |
|---|---|---|---|---|---|---|---|---|
| Gel Time, min:sec | 2:20 | 2:30 | 1.35 | 1:45 | 7:30 | 35:00 | 12:17 | 9:30 |
| Demold Time (hr) | 0:20 | 0:20 | 0:20 | 0:20 | 16:00 | 1:00 | 2:00 | 16:00 |

| **Properties:** | | | | | | | | |
|---|---|---|---|---|---|---|---|---|
| Shore Hardness | 78D | 72D | 77D | 58D | 79D | 86A | 97A | 96A |
| % Elongation | 2.2 | 197 | 147 | 4.7 | 1.0 | 414 | 392 | 416 |
| Tensile Str (psi) (MPa) | (3367) 23.21 | (6368) 43.90 | (7160) 49.37 | (3353) 23.12 | (1091) 7.52 | (2253) 15.53 | (3179) 21.92 | (3459) 23.85 |
| Flex. Mod. (psi) (MPa) | (177,000) 1220.37 | (124,300) 857.02 | (161,800) 1115.57 | (108,538) 748.34 | (323,600) 2231.14 | n/a | (17,300) 119.28 | (19,900) 137.20 |
| Izod Impact (ftlb.in) / (J/m) | (1.4) / 74.73 | (4.1) / 218.86 | (4.6) I 245.55 | (0.13)/6.94 | * | (2.1) / 112.10 | (7.68) / 409.96 | (8.65) / 461.74 |
| % Transmittance | 88 | 88 | 87.1 | n/a | 90.9 | 90 | 92 | 91 |
| % Haze | 1.3 | 1.5 | 4.0 | n/a | 0.54 | 4.8 | 7.9 | 5.7 |
| Sample Thickness (inches) / (cm) | (0.125") / 0.3175 | (0.125") / 0.3175 | (0.125") / 0.3175 | (0.125") / 0.3175 | (0.125") / 0.3175 | (0.125") / 0.3175 | (0.125") / 0.3175 | (0.125") / 0.3175 |
| Appearance | Clear | Clear | Clear | Opaque | Clear | Clear | Clear | Clear |

| | | | | | | | | |
|---|---|---|---|---|---|---|---|---|
| * too brittle ** comparative | | | | | | | | |

Examples 16 and 17 were identical to the systems as described above in Examples 1 and 2, respectively, from Table 3A, with the exception that Examples 16 and 17 did not contain any internal mold release agent. The results are shown in Table 4.

**Table 4: Solid Polyurethanes from Prepolymer A with Polyol Blends A and B**

| Solid Polyurethane Urea | Example 1* ** | Example 2* | Example 16 | Example 17 |
|---|---|---|---|---|
| Polyol Blend/pbw | Blend | Blend | Blend | Blend |
| | A / 100 | B / 100 | A / 100 | B / 100 |
| Prepolymer/pbw | A / 178 | A / 176 | A / 178 | A / 176 |

| **Stoichiometry:** | | | | |
|---|---|---|---|---|
| Equivalent Ratio of NH₂:NCO | 0.695:1.0 | 0.689:1.0 | 0.695:1.0 | 0.689:1.0 |

| **Processing:** | | | | |
|---|---|---|---|---|
| Gel Time, min:sec | 1:00 | 1:20 | 1:00 | 1:20 |
| Demold Time (hr) | 16 | 2 | 16 | 2 |

| **Properties:** | | | | |
|---|---|---|---|---|
| Shore Hardness | 80D | 77D | 80D | 77D |
| % Elongation | 33 | 28.4 | 33 | 28.4 |
| Tensile Str (psi) (MPa) | (8578) 59.14 | (8883) 61.25 | (8578) 59.14 | (8883) 61.25 |
| Flex. Mod. (psi) (MPa) | (236,100) 1627.85 | (240,600) 1658.88 | (236,100) 1627.85 | (240,600) 1658.88 |
| Izod impact (ftlb.in) (J/m) | (1.172) 62.56 | (1.185) 63.26 | (1.172) 62.56 | (1.185) 63.26 |
| % Transmittance | 77 | 89 | 92.3 | 89.6 |
| % Haze | 2.0 | 1.1 | 0.94 | 0.67 |
| Sample Thickness (inches) / (cm) | (0.125") / 0.3175 | (0.125") / 0.3175 | (0.125) / 0.3175 | (0.125) / 0.3175 |
| Appearance | Clear | Clear | Clear | Clear |

| | | | | |
|---|---|---|---|---|
| * contained Axel INT 1681/OG as internal mold release agent ** comparative | | | | |

## Claims

1. A polyurethane-urea comprising the reaction product of:
(A) at least one (cyclo)aliphatic polyisocyanate or (cyclo)aliphatic polyisocyanate prepolymer having an NCO group content of 4 to 50%, and an average functionality of 2 to 3;
with
(B) an isocyanate-reactive component comprising:
(1) one or more aromatic diamine compounds containing two primary aromatic amine groups and having a molecular weight of 100 to 1,000,
(2) one or more isocyanate-reactive compounds containing two secondary amine groups and having a molecular weight of 100 to 750, wherein the secondary amine groups are attached to (cyclo)aliphatic and/or aromatic groups;
and, optionally,
(3) one or more hydroxyl-functional compounds having a functionality of from 2.0 to 3.0 and a molecular weight of 100 to 4,000;
optionally, in the presence of
(C) one or more catalysts,
wherein the relative quantities of (A) and (B) are such that the Isocyanate Index is from 95 to 110.

2. The polyurethane-urea of Claim 1, wherein (A) comprises a polyisocyanate prepolymer which comprises the reaction product of:
(1) a (cyclo)aliphatic polyisocyanate having an NCO group content of 4% to 50% and a functionality of 2.0 to 3.0, wherein said (cyclo)aliphatic polyisocyanate is selected from the group consisting of 4,4'-dicyclohexylmethane diisocyanate, 1,6-hexamethylene diisocyanate, isophorone diisocyanate, 1,4-cyclohexane diisocyanate, m-tetramethylxylene diisocyanate and mixtures thereof,
and
(2) at least one organic compound which contains at least two hydroxyl groups and has a molecular weight of 100 to 4,000;
wherein the equivalent ratio of NCO to OH is from 2.25:1.0 to 20.0:1.0.

3. The polyurethane-urea of Claim 2, wherein (A) comprises a polyisocyanate prepolymer and the equivalent ratio of NCO to OH in the prepolymer is from 5.0:1.0 to 12.25:1.0.

4. The polyurethane-urea of Claim 2, wherein (A) comprises a polyisocyanate prepolymer and the equivalent ratio of NCO to OH in the prepolymer is from 6.0:1.0 to 10.0:1.0.

5. The polyurethane-urea of Claim 1, in which (B) said isocyanate-reactive component comprises:
(1) one or more aromatic diamine compounds containing two primary aromatic amine groups and having a molecular weight of 100 to 400, and
(2) one or more isocyanate-reactive compounds containing two secondary amine groups which are aliphatic and/or aromatic amine groups, and having a molecular weight of 100 to 750.

6. The polyurethane-urea of Claim 1, wherein the equivalent ratio of NH₂: NCO is from 0.6:1.0 to 0.95:1.0.

7. The polyurethane-urea of Claim 6, wherein the equivalent ratio of NH₂/NCO is from 0.6:1.0 to 0.9:1.0.

8. The polyurethane-urea of Claim 6, wherein the equivalent ratio of NH₂/NCO is from 0.65:1.0 to 0.75:1.0.

9. The polyurethane-urea of Claim 1, wherein component (A) comprises:
(A)(1) from 20 to 100% by weight, based on 100% by weight of (A), of a (cyclo)aliphatic polyisocyanate;
and
(A)(2) from 0 to 80% by weight, based on 100% by weight of (A), of at least one organic compound which contains at least two hydroxyl groups and has a molecular weight of 100 to 4,000;
with the sum of the %'s by weight of (A)(1) and (A)(2) totaling 100% by weight of (A).

10. The polyurethane-urea of Claim 9, wherein (A) comprises from 60 to 90% by weight of (A)(1) and from 10 to 40% by weight of (A)(2).

11. The polyurethane-urea of Claim 1, wherein (A)(1) comprises 4,4'-dicyclohexylmethane diisocyanate and (A)(2) comprises a polyester polyol, a polyether glycol, a polyether polyol or a mixture thereof.

12. The polyurethane-urea of Claim 11, wherein (A)(2) comprises a polycaprolactone polyester polyol.

13. The polyurethane-urea of Claim 2, wherein (A)(2) comprises (i) a polyester polyol, a polyether polyol, or a mixture thereof, and (ii) a trifunctional chain extender or crosslinker.

14. The polyurethane-urea of Claim 1, in which (B)(1) said aromatic diamine has a molecular weight of 100 to 400 and comprises 1,4-diaminobenzene, 2,4-diaminotoluene, 2,6-diaminotoluene, 3,5-diethyl-2,4-toluenediamine, 3,5-diethyl-2,6-toluenediamine, 3,5-dithiomethyl-2,4-diaminotoluene, 2,4'-diaminodiphenylmethane, 4,4'-diaminodiphenylmethane and mixtures thereof.

15. The polyurethane-urea of Claim 1, in which (B)(2) comprises an N-alkyl-substituted aromatic diamine, an N,N'-dialkyl-substituted aromatic diamine, an N,N'dialkyl-substituted isophorone diamine, an aliphatic secondary diamine, a polyaspartic ester, or mixtures thereof.

16. The polyurethane-urea of Claim 1, wherein (B) the isocyanate-reactive component comprises:
(B)(1) from 10 to 95% by weight of at least one aromatic diamine which contains two primary amine groups bound to aromatic groups and having a molecular weight of 100 to 400,
and
(B)(2) from 5 to 90% by weight of at least one isocyanate-reactive component containing 2 secondary amine groups which are attached to (cyclo)aliphatic and/or aromatic groups and having a molecular weight of 200 to 600;
wherein the sum of the %'s by weight of (B)(1) and (B)(2) totals 100% by weight of (B).

17. The polyurethane-urea of Claim 1, wherein (B)(1) comprises 3,5-diethyl-2,4-toluenediamine, 3,5-diethyl-2,6-toluenediamine or a mixture thereof; and (B)(2) comprises a polyaspartic ester.

18. The polyurethane-urea of Claim 1, wherein (B) said isocyanate-reactive component comprises:
(B)(1) from 30 to 79% by weight of at least one aromatic diamine which contains two primary amine groups bound to aromatic groups and having a molecular weight of 100 to 1,000;
(B)(2) from 1 to 20% by weight of at least one isocyanate-reactive component containing 2 secondary amine groups which are attached to (cyclo)aliphatic and/or aromatic groups and having a molecular weight of 100 to 750;
and
(B)(3) from 20 to 50% by weight of one or more hydroxyl functional compounds having an OH functionality of from 2 to 3 and a molecular weight of from 100 to 4,000.
wherein the sum of the %'s by weight of (B)(1), (B)(2) and (B)(3) totals 100% by weight of (B).

19. The polyurethane-urea of Claim 18, wherein (B)(1) comprises 3,5-diethyl-2,4-toluenediamine, 3,5-diethyl-2,6-toluenediamine or a mixture thereof; (B)(2) comprises a polyaspartic ester; and (B)(3) comprises a polyether polyol, a polyester polyol or a polyether glycol.

20. A polyurethane-urea comprising the reaction product of:
(A) at least one (cyclo)aliphatic polyisocyanate prepolymer having an NCO group content of 4 to 50%, and an average functionality of 2 to 3, and comprising the reaction product of;
(1) at least one (cyclo)aliphatic polyisocyanate, with
(2) of at least one organic compound which contains at least two hydroxyl groups and has a molecular weight of 100 to 4,000;
with
(B) an isocyanate-reactive component comprising:
(1) one or more aromatic diamine compounds containing two primary aromatic amine groups and having a molecular weight of 100 to 1,000,
(2) one or more isocyanate-reactive compounds containing two secondary amine groups and having a molecular weight of 100 to 750, wherein the secondary amine groups are attached to (cyclo)aliphatic and/or aromatic groups;
and,
(3) one or more hydroxyl-functional compounds having a functionality of from 2.0 to 3.0 and a molecular weight of 100 to 4,000;
optionally, in the presence of
(C) one or more catalysts,
wherein the relative quantities of (A) and (B) are such that the Isocyanate Index is from 95 to 110, the equivalent ratio of NCO to OH in the prepolymer is from 2.25:1.0 to 20.0:1.0 and the equivalent ratio of NH₂:NCO is from 0.6:1.0 to 0.95:1.0.

21. The polyurethane-urea of Claim 20, wherein (A)(1) comprises 4,4'-dicyclohexylmethane diisocyanate, (B)(1) comprises 3,5-diethyl-2,4-toluenediamine, 3,5-diethyl-2,6-toluenediamine or a mixture thereof; and (B)(2) comprises a polyaspartic ester.

22. A process for the production of a polyurethane-ureas comprising
(1) reacting
(A) at least one (cyclo)aliphatic polyisocyanate or (cyclo)aliphatic polyisocyanate prepolymer having an NCO group content of 4 to 50%, and an average functionality of 2 to 3;
with
(B) an isocyanate-reactive component comprising:
(1) one or more aromatic diamine compounds containing two primary aromatic amine groups and having a molecular weight of 100 to 1,000,
(2) one or more isocyanate-reactive compounds containing two secondary amine groups, and having a molecular weight of 100 to 750, wherein the secondary amine groups are attached to (cyclo)aliphatic and/or aromatic groups;
and, optionally,
(3) one or more hydroxyl-functional compounds having a functionality of from 2.0 to 3.0 and a molecular weight of 100 to 4,000;
optionally, in the presence of
(C) one or more catalysts,
wherein the relative quantities of (A) and (B) are such that the Isocyanate Index is from 95 to 110.

23. The process of Claim 22, wherein (A) comprises a polyisocyanate prepolymer comprising the reaction product of:
(1) a (cyclo)aliphatic polyisocyanate having an NCO group content of 4% to 50% and a functionality of 2.0 to 3.0, wherein said (cyclo)aliphatic polyisocyanate is selected from the group consisting of 4,4'-dicyclohexylmethane diisocyanate, 1,6-hexamethylene diisocyanate, isophorone diisocyanate, 1,4-cyclohexane diisocyanate, m-tetramethylxylene diisocyanate and mixtures thereof,
and
(2) at least one organic compound which contains at least two hydroxyl groups and has a molecular weight of 100 to 4,000;
wherein the equivalent ratio of NCO to OH in the prepolymer is from 2.25:1.0 to 20.0:1.0.

24. The process of Claim 23, wherein (A) comprises a polyisocyanate prepolymer and the equivalent ratio of NCO to OH in the prepolymer is from 5.0:1.0 to 12.25:1.0.

25. The process of Claim 23, wherein (A) comprises a polyisocyanate prepolymer and the equivalent ratio of NCO to OH in the prepolymer is from 6.0:1.0 to 10.0:1.0.

26. The process of Claim 22, wherein (B) said isocyanate-reactive component comprises:
(1) one or more aromatic diamine compounds containing two primary aromatic amine groups and having a molecular weight of 100 to 400,
and
(2) one or more isocyanate-reactive compounds containing two secondary amine groups which are aliphatic and/or aromatic amine groups, and having a molecular weight of about 100 to 750.

27. The process of Claim 22, wherein the equivalent ratio of NH₂: NCO is from 0.6:1.0 to 0.95:1.0.

28. The process of Claim 27, wherein the equivalent ratio of NH₂/NCO is from 0.6:1.0 to 0.9:1.0.

29. The process of Claim 27, wherein the equivalent ratio of NH₂/NCO is from 0.65:1.0 to 0.75:1.0.

30. The process of Claim 22, wherein component (A) comprises:
(A)(1) from 20 to 100% by weight, based on 100% by weight of (A), of a (cyclo)aliphatic polyisocyanate;
and
(A)(2) from 0 to 80% by weight, based on 100% by weight of (A), of at least one organic compound which contains at least two hydroxyl groups and has a molecular weight of 100 to 4,000;
with the sum of the %'s by weight of (A)(1) and (A)(2) totaling 100% by weight of (A).

31. The polyurethane-urea of Claim 30, wherein (A) comprises from 60 to 90% by weight of (A)(1) and from 10 to 40% by weight of (A)(2).

32. The process of Claim 22, wherein (A)(1) comprises 4,4'-dicyclohexylmethane diisocyanate and (A)(2) comprises a polyester polyol, a polyether glycol, a polyether polyol or a mixture thereof.

33. The process of Claim 32, wherein (A)(2) comprises a polycaprolactone polyester polyol.

34. The process of Claim 23, wherein (A)(2) comprises (i) a polyester polyol, a polyether polyol, or a mixture thereof, and (ii) a trifunctional chain extender or crosslinker.

35. The process of Claim 22, in which (B)(1) said aromatic diamine has a molecular weight of 100 to 400 and comprises 1,4-diaminobenzene, 2,4-diaminotoluene, 2,6-diaminotoluene, 3,5-diethyl-2,4-toluenediamine, 3,5-diethyl-2,6-toluenediamine, 3,5-dithiomethyl-2,4-diaminotoluene, 2,4'-diaminodiphenylmethane, 4,4'-diaminodiphenylmethane and mixtures thereof.

36. The process of Claim 22, in which (B)(2) comprises an N-alkyl-substituted aromatic diamine, an N,N'-dialkyl-substituted aromatic diamine, an N,N'dialkyl-substituted isophorone diamine, an aliphatic secondary diamine, a polyaspartic ester, or mixtures thereof.

37. The process of Claim 22, wherein (B) the isocyanate-reactive component comprises:
(B)(1) from 10 to 95% by weight of at least one aromatic diamine which contains two primary amine groups bound to aromatic groups and having a molecular weight of 100 to 400,
and
(B)(2) from 5 to 90% by weight of at least one isocyanate-reactive component containing 2 secondary amine groups which are attached to (cyclo)aliphatic and/or aromatic groups and having a molecular weight of 200 to 600;
wherein the sum of the %'s by weight of (B)(1) and (B)(2) totals 100% by weight of (B).

38. The process of Claim 22, wherein (B)(1) comprises 3,5-diethyl-2,4-toluenediamine, 3,5-diethyl-2,6-toluenediamine or a mixture thereof; and (B)(2) comprises a polyaspartic ester.

39. The process of Claim 22, wherein (B) said isocyanate-reactive component comprises:
(B)(1) from 30 to 79% by weight of at least one aromatic diamine which contains two primary amine groups bound to aromatic groups and having a molecular weight of 100 to 1,000;
(B)(2) from 1 to 20% by weight of at least one isocyanate-reactive component containing 2 secondary amine groups which are attached to (cyclo)aliphatic and/or aromatic groups and having a molecular weight of 100 to 750;
and
(B)(3) from 20 to 50% by weight of one or more hydroxyl functional compounds having an OH functionality of from 2 to 3 and a molecular weight of from 100 to 4,000.
wherein the sum of the %'s by weight of (B)(1), (B)(2) and (B)(3) totals 100% by weight of (B).

40. The process of Claim 39, wherein (B)(1) comprises 3,5-diethyl-2,4-toluenediamine, 3,5-diethyl-2,6-toluenediamine or a mixture thereof; (B)(2) comprises a polyaspartic ester; and (B)(3) comprises a polyether polyol, a polyester polyol or a polyether glycol.

41. A process for the production of polyurethane-ureas, comprising
(1) reacting:
(A) at least one (cyclo)aliphatic polyisocyanate prepolymer having an NCO group content of 4 to 50%, and an average functionality of 2 to 3, and which comprises the reaction product of;
(1) at least one (cyclo)aliphatic polyisocyanate, with
(2) of at least one organic compound which contains at least two hydroxyl groups and has a molecular weight of 100 to 4,000;
with
(B) an isocyanate-reactive component which comprises:
(1) one or more aromatic diamine compounds containing two primary aromatic amine groups and having a molecular weight of 100 to 1,000,
(2) one or more isocyanate-reactive compounds containing two secondary amine groups and having a molecular weight of 100 to 750, wherein the secondary amine groups are attached to (cyclo)aliphatic and/or aromatic groups;
and,
(3) one or more hydroxyl-functional compounds having a functionality of from 2.0 to 3.0 and a molecular
weight of 100 to 4,000;
optionally, in the presence of
(C) one or more catalysts,
wherein the relative quantities of (A) and (B) are such that the Isocyanate Index is from 95 to 110, the equivalent ratio of NCO to OH in the prepolymer is from 2.25:1.0 to 20.0:1.0 and the equivalent ratio of NH₂:NCO is from 0.6:1.0 to 0.95:1.0.

42. The process of Claim 41, wherein (A)(1) comprises 4,4'-dicyclohexylmethane diisocyanate, (B)(1) comprises 3,5-diethyl-2,4-toluenediamine, 3,5-diethyl-2,6-toluenediamine or a mixture thereof; and (B)(2) comprises a polyaspartic ester.

## Patentansprüche

1. Polyurethanharnstoff, umfassend das Reaktionsprodukt von:
(A) mindestens einem (cyclo)aliphatischen Polyisocyanat oder (cyclo)aliphatischen Polyisocyanatprepolymer mit einem NCO-Gruppengehalt von 4 bis 50% und einer durchschnittlichen Funktionalität von 2 bis 3;
mit
(B) einer gegenüber Isocyanat reaktiven Komponente, umfassend:
(1) eine oder mehrere aromatische Diaminverbindungen mit zwei primären aromatischen Amingruppen und einem Molekulargewicht von 100 bis 1000,
(2) eine oder mehrere gegenüber Isocyanat reaktive Verbindungen mit zwei sekundären Amingruppen und einem Molekulargewicht von 100 bis 750, wobei die sekundären Amingruppen an (cyclo)aliphatische und/oder aromatische Gruppen gebunden sind;
und gegebenenfalls
(3) eine oder mehrere hydroxylfunktionelle Verbindungen mit einer Funktionalität von 2,0 bis 3,0 und einem Molekulargewicht von 100 bis 4000;
gegebenenfalls in Gegenwart von
(C) einem oder mehreren Katalysatoren,
wobei die relativen Mengen von (A) und (B) so bemessen sind, dass der Isocyanat-Index 95 bis 110 beträgt.

2. Polyurethanharnstoff nach Anspruch 1, wobei (A) ein Polyisocyanatprepolymer umfasst, welches das Reaktionsprodukt von:
(1) einem (cyclo)aliphatischen Polyisocyanat mit einem NCO-Gruppengehalt von 4 bis 50% und einer Funktionalität von 2,0 bis 3,0, wobei das (cyclo)aliphatische Polyisocyanat aus der Gruppe bestehend aus 4,4'-Dicyclohexylmethandiisocyanat, 1,6-Hexamethylendiisocyanat, Isophorondiisocyanat, 1,4-Cyclohexandiisocyanat, m-Tetramethylxyloldiisocyanat und Mischungen davon ausgewählt ist,
und
(2) mindestens einer organischen Verbindung, die mindestens zwei Hydroxylgruppen enthält und ein Molekulargewicht von 100 bis 4000 aufweist;
wobei das Äquivalentverhältnis von NCO zu OH 2,25:1,0 bis 20,0:1,0 beträgt; umfasst.

3. Polyurethanharnstoff nach Anspruch 2, wobei (A) ein Polyisocyanatprepolymer umfasst und das Äquivalentverhältnis von NCO zu OH in dem Prepolymer 5,0:1,0 bis 12,25:1,0 beträgt.

4. Polyurethanharnstoff nach Anspruch 2, wobei (A) ein Polyisocyanatprepolymer umfasst und das Äquivalentverhältnis von NCO zu OH in dem Prepolymer 6,0:1,0 bis 10,0:1,0 beträgt.

5. Polyurethanharnstoff nach Anspruch 1, wobei (B) die gegenüber Isocyanat reaktive Komponente
(1) eine oder mehrere aromatische Diaminverbindungen mit zwei primären aromatischen Amingruppen und einem Molekulargewicht von 100 bis 400 und
(2) eine oder mehrere gegenüber Isocyanat reaktive Verbindungen mit zwei sekundären Amingruppen, die aliphatisch und/oder aromatisch sind, und einem Molekulargewicht von 100 bis 750 umfasst.

6. Polyurethanharnstoff nach Anspruch 1, wobei das NH₂:NCO-Äquivalentverhältnis 0,6:1,0 bis 0,95:1,0 beträgt.

7. Polyurethanharnstoff nach Anspruch 6, wobei das NH₂/NCO-Äquivalentverhältnis 0,6:1,0 bis 0,9:1,0 beträgt.

8. Polyurethanharnstoff nach Anspruch 6, wobei das NH₂/NCO-Äquivalentverhältnis 0,65:1,0 bis 0,75:1,0 beträgt.

9. Polyurethanharnstoff nach Anspruch 1, wobei Komponente (A)
(A)(1) 20 bis 100 Gew.-%, bezogen auf 100 Gew.-% (A), eines (cyclo)aliphatischen Polyisocyanats
und
(A)(2) 0 bis 80 Gew.-%, bezogen auf 100 Gew.-% (A), mindestens einer organischen Verbindung, die mindestens zwei Hydroxylgruppen enthält und ein Molekulargewicht von 100 bis 4000 aufweist;
umfasst, wobei sich die Summe der Gewichtsprozentanteile von (A)(1) und (A)(2) auf 100 Gew.-% (A) beläuft.

10. Polyurethanharnstoff nach Anspruch 9, wobei (A) 60 bis 90 Gew.-% (A)(1) und 10 bis 40 Gew.-% (A)(2) umfasst.

11. Polyurethanharnstoff nach Anspruch 1, wobei (A)(1) 4,4'-Dicyclohexylmethandiisocyanat umfasst und (A)(2) ein Polyesterpolyol, ein Polyetherglykol, ein Polyetherpolyol oder eine Mischung davon umfasst.

12. Polyurethanharnstoff nach Anspruch 11, wobei (A)(2) ein Polycaprolactonpolyesterpolyol umfasst.

13. Polyurethanharnstoff nach Anspruch 2, wobei (A)(2) (i) ein Polyesterpolyol, ein Polyetherpolyol oder eine Mischung davon und (ii) einen trifunktionellen Kettenverlängerer oder Vernetzer umfasst.

14. Polyurethanharnstoff nach Anspruch 1, wobei (B)(1) das aromatische Diamin ein Molekulargewicht von 100 bis 400 aufweist und 1,4-Diaminobenzol, 2,4-Diaminotoluol, 2,6-Diaminotoluol, 3,5-Diethyl-2,4-toluoldiamin, 3,5-Diethyl-2,6-toluoldiamin, 3,5-Dithiomethyl-2,4-diaminotoluol, 2,4'-Diaminodiphenylmethan, 4,4'-Diaminodiphenylmethan und Mischungen davon umfasst.

15. Polyurethanharnstoff nach Anspruch 1, wobei (B)(2) ein N-alkylsubstituiertes aromatisches Diamin, ein N,N'-dialkylsubstituiertes aromatisches Diamin, ein N,N'-dialkylsubstituiertes Isophorondiamin, ein aliphatisches sekundäres Diamin, einen Polyasparaginsäureester oder Mischungen davon umfasst.

16. Polyurethanharnstoff nach Anspruch 1, wobei (B) die gegenüber Isocyanat reaktive Komponente
(B)(1) 10 bis 95 Gew.-% mindestens eines aromatischen Diamins, das zwei an aromatische Gruppen gebundene primäre Amingruppen enthält und ein Molekulargewicht von 100 bis 400 aufweist,
und
(B)(2) 5 bis 90 Gew.-% mindestens einer gegenüber Isocyanat reaktiven Komponente, die 2 an (cyclo)aliphatische und/oder aromatische Gruppen gebundene sekundäre Aminogruppen enthält und ein Molekulargewicht von 200 bis 600 aufweist;
umfasst, wobei sich die Summe der Gewichtsprozentanteile von (B)(1) und (B)(2) auf 100 Gew.-% (B) beläuft.

17. Polyurethanharnstoff nach Anspruch 1, wobei (B)(1) 3,5-Diethyl-2,4-toluoldiamin, 3,5-Diethyl-2,6-toluoldiamin oder eine Mischung davon umfasst und (B)(2) einen Polyasparaginsäureester umfasst.

18. Polyurethanharnstoff nach Anspruch 1, wobei (B) die gegenüber Isocyanat reaktive Komponente
(B)(1) 30 bis 79 Gew.-% mindestens eines aromatischen Diamins, das zwei an aromatische Gruppen gebundene primäre Amingruppen enthält und ein Molekulargewicht von 100 bis 1000 aufweist,
(B)(2) 1 bis 20 Gew.-% mindestens einer gegenüber Isocyanat reaktiven Komponente, die 2 an (cyclo)aliphatische und/oder aromatische Gruppen gebundene sekundäre Aminogruppen enthält und ein Molekulargewicht von 100 bis 750 aufweist;
und
(B)(3) 20 bis 50 Gew.-% einer oder mehrerer hydroxylfunktioneller Verbindungen mit einer OH-Funktionalität von 2 bis 3 und einem Molekulargewicht von 100 bis 4000 umfasst, wobei sich die Summe der Gewichtsprozentanteile von (B)(1), (B)(2) und (B)(3) auf 100 Gew.-% (B) beläuft.

19. Polyurethanharnstoff nach Anspruch 18, wobei (B)(1) 3,5-Diethyl-2,4-toluoldiamin, 3,5-Diethyl-2,6-toluoldiamin oder eine Mischung davon umfasst; (B)(2) einen Polyasparaginsäureester umfasst und (B)(3) ein Polyetherpolyol, ein Polyesterpolyol oder ein Polyetherglykol umfasst.

20. Polyurethanharnstoff, umfassend das Reaktionsprodukt von:
(A) mindestens einem (cyclo)aliphatischen Polyisocyanatprepolymer mit einem NCO-Gruppengehalt von 4 bis 50% und einer durchschnittlichen Funktionalität von 2 bis 3, umfassend das Reaktionsprodukt von
(1) mindestens einem (cyclo)aliphatischen Polyisocyanat mit
(2) mindestens einer organischen Verbindung, die mindestens zwei Hydroxylgruppen enthält und ein Molekulargewicht von 100 bis 4000 aufweist;
mit
(B) einer gegenüber Isocyanat reaktiven Komponente, umfassend:
(1) eine oder mehrere aromatische Diaminverbindungen mit zwei primären aromatischen Amingruppen und einem Molekulargewicht von 100 bis 1000,
(2) eine oder mehrere gegenüber Isocyanat reaktiven Verbindungen mit zwei sekundären Amingruppen und einem Molekulargewicht von 100 bis 750, wobei die sekundären Amingruppen an (cyclo)aliphatische und/oder aromatische Gruppen gebunden sind;
und
(3) eine oder mehrere hydroxylfunktionelle Verbindungen mit einer Funktionalität von 2,0 bis 3,0 und einem Molekulargewicht von 100 bis 4000;
gegebenenfalls in Gegenwart von
(C) einem oder mehreren Katalysatoren,
wobei die relativen Mengen von (A) und (B) so bemessen sind, dass der Isocyanat-Index 95 bis 110 beträgt, das Äquivalentverhältnis von NCO zu OH in dem Prepolymer 2,25:1,0 bis 20,0:1,0 beträgt und das NH₂:NCO-Äquivalentverhältnis 0,6:1,0 bis 0,95:1,0 beträgt.

21. Polyurethanharnstoff nach Anspruch 20, wobei (A)(1) 4,4'-Dicyclohexylmethandiisocyanat umfasst, (B)(1) 3,5-Diethyl-2,4-toluoldiamin, 3,5-Diethyl-2,6-toluoldiamin oder eine Mischung davon umfasst und (B)(2) einen Polyasparaginsäureester umfasst.

22. Verfahren zur Herstellung eines Polyurethanharnstoffs, umfassend
(1) Umsetzen von
(A) mindestens einem (cyclo)aliphatischen Polyisocyanat oder (cyclo)aliphatischen Polyisocyanatprepolymer mit einem NCO-Gruppengehalt von 4 bis 50% und einer durchschnittlichen Funktionalität von 2 bis 3;
mit
(B) einer gegenüber Isocyanat reaktiven Komponente, umfassend:
(1) eine oder mehrere aromatische Diaminverbindungen mit zwei primären aromatischen Amingruppen und einem Molekulargewicht von 100 bis 1000,
(2) eine oder mehrere gegenüber Isocyanat reaktive Verbindungen mit zwei sekundären Amingruppen und einem Molekulargewicht von 100 bis 750, wobei die sekundären Amingruppen an (cyclo)aliphatische und/oder aromatische Gruppen gebunden sind;
und gegebenenfalls
(3) eine oder mehrere hydroxylfunktionelle Verbindungen mit einer Funktionalität von 2,0 bis 3,0 und einem Molekulargewicht von 100 bis 4000;
gegebenenfalls in Gegenwart von
(C) einem oder mehreren Katalysatoren,
wobei die relativen Mengen von (A) und (B) so bemessen werden, dass der Isocyanat-Index 95 bis 110 beträgt.

23. Verfahren nach Anspruch 22, wobei (A) ein Polyisocyanatprepolymer umfasst, welches das Reaktionsprodukt von:
(1) einem (cyclo)aliphatischen Polyisocyanat mit einem NCO-Gruppengehalt von 4 bis 50% und einer Funktionalität von 2,0 bis 3,0, wobei das (cyclo)aliphatische Polyisocyanat aus der Gruppe bestehend aus 4,4'-Dicyclohexylmethandiisocyanat, 1,6-Hexamethylendiisocyanat, Iso-phorondiisocyanat, 1,4-Cyclohexandiisocyanat, m-Tetramethylxyloldiisocyanat und Mischungen davon ausgewählt ist,
und
(2) mindestens einer organischen Verbindung, die mindestens zwei Hydroxylgruppen enthält und ein Molekulargewicht von 100 bis 4000 aufweist;
wobei das Äquivalentverhältnis von NCO zu OH in dem Prepolymer 2,25:1,0 bis 20,0:1,0 beträgt; umfasst.

24. Verfahren nach Anspruch 23, wobei (A) ein Polyisocyanatprepolymer umfasst und das Äquivalentverhältnis von NCO zu OH in dem Prepolymer 5,0:1,0 bis 12,25:1,0 beträgt.

25. Verfahren nach Anspruch 23, wobei (A) ein Polyisocyanatprepolymer umfasst und das Äquivalentverhältnis von NCO zu OH in dem Prepolymer 6,0:1,0 bis 10,0:1,0 beträgt.

26. Verfahren nach Anspruch 22, wobei (B) die gegenüber Isocyanat reaktive Komponente
(1) eine oder mehrere aromatische Diaminverbindungen mit zwei primären aromatischen Amingruppen und einem Molekulargewicht von 100 bis 400 und
(2) eine oder mehrere gegenüber Isocyanat reaktive Verbindungen mit zwei sekundären Amingruppen, die
aliphatisch und/oder aromatisch sind, und einem Molekulargewicht von 100 bis 750
umfasst.

27. Verfahren nach Anspruch 22, wobei das NH₂:NCO-Äquivalentverhältnis 0,6:1,0 bis 0,95:1,0 beträgt.

28. Verfahren nach Anspruch 27, wobei das NH₂/NCO-Äquivalentverhältnis 0,6:1,0 bis 0,9:1,0 beträgt.

29. Verfahren nach Anspruch 27, wobei das NH₂/NCO-Äquivalentverhältnis 0,65:1,0 bis 0,75:1,0 beträgt.

30. Verfahren nach Anspruch 22, wobei Komponente (A)
(A)(1) 20 bis 100 Gew.-%, bezogen auf 100 Gew.-% (A), eines (cyclo)aliphatischen Polyisocyanats
und
(A)(2) 0 bis 80 Gew.-%, bezogen auf 100 Gew.-% (A), mindestens einer organischen Verbindung, die mindestens zwei Hydroxylgruppen enthält und ein Molekulargewicht von 100 bis 4000 aufweist;
umfasst, wobei sich die Summe der Gewichtsprozentanteile von (A)(1) und (A)(2) auf 100 Gew.-% (A) beläuft.

31. Verfahren nach Anspruch 30, wobei (A) 60 bis 90 Gew.-% (A)(1) und 10 bis 40 Gew.-% (A)(2) umfasst.

32. Verfahren nach Anspruch 22, wobei (A)(1) 4,4'-Dicyclohexylmethandiisocyanat umfasst und (A)(2) ein Polyesterpolyol, ein Polyetherglykol, ein Polyetherpolyol oder eine Mischung davon umfasst.

33. Verfahren nach Anspruch 32, wobei (A)(2) ein Polycaprolactonpolyesterpolyol umfasst.

34. Verfahren nach Anspruch 23, wobei (A)(2) (i) ein Polyesterpolyol, ein Polyetherpolyol oder eine Mischung davon und (ii) einen trifunktionellen Kettenverlängerer oder Vernetzer umfasst.

35. Verfahren nach Anspruch 22, wobei (B)(1) das aromatische Diamin ein Molekulargewicht von 100 bis 400 aufweist und 1,4-Diaminobenzol, 2,4-Diaminotoluol, 2,6-Diaminotoluol, 3,5-Diethyl-2,4-toluoldiamin, 3,5-Diethyl-2,6-toluoldiamin, 3,5-Dithiomethyl-2,4-diaminotoluol, 2,4'-Diaminodiphenylmethan, 4,4'-Diaminodiphenylmethan und Mischungen davon umfasst.

36. Verfahren nach Anspruch 22, wobei (B)(2) ein N-alkylsubstituiertes aromatisches Diamin, ein N,N'-dialkylsubstituiertes aromatisches Diamin, ein N,N'-dialkylsubstituiertes Isophorondiamin, ein aliphatisches sekundäres Diamin, einen Polyasparaginsäureester oder Mischungen davon umfasst.

37. Verfahren nach Anspruch 22, wobei (B) die gegenüber Isocyanat reaktive Komponente
(B)(1) 10 bis 95 Gew.-% mindestens eines aromatischen Diamins, das zwei an aromatische Gruppen gebundene primäre Amingruppen enthält und ein Molekulargewicht von 100 bis 400 aufweist,
und
(B)(2) 5 bis 90 Gew.-% mindestens einer gegenüber Isocyanat reaktiven Komponente, die 2 an (cyclo)aliphatische und/oder aromatische Gruppen gebundene sekundäre Amingruppen enthält und ein Molekulargewicht von 200 bis 600 aufweist;
umfasst, wobei sich die Summe der Gewichtsprozentanteile von (B)(1) und (B)(2) auf 100 Gew.-% (B) beläuft.

38. Verfahren nach Anspruch 22, wobei (B)(1) 3,5-Diethyl-2,4-toluoldiamin, 3,5-Diethyl-2,6-toluoldiamin oder eine Mischung davon umfasst und (B)(2) einen Polyasparaginsäureester umfasst.

39. Verfahren nach Anspruch 22, wobei (B) die gegenüber Isocyanat reaktive Komponente
(B)(1) 30 bis 79 Gew.-% mindestens eines aromatischen Diamins, das zwei an aromatische Gruppen gebundene primäre Amingruppen enthält und ein Molekulargewicht von 100 bis 1000 aufweist,
(B)(2) 1 bis 20 Gew.-% mindestens einer gegenüber Isocyanat reaktiven Komponente, die 2 an (cyclo)aliphatische und/oder aromatische Gruppen gebundene sekundäre Amingruppen enthält und ein Molekulargewicht von 100 bis 750 aufweist;
und
(B)(3) 20 bis 50 Gew.-% einer oder mehrerer hydroxylfunktioneller Verbindungen mit einer OH-Funktionalität von 2 bis 3 und einem Molekulargewicht von 100 bis 4000 umfasst, wobei sich die Summe der Gewichtsprozentanteile von (B)(1), (B)(2) und (B)(3) auf 100 Gew.-% (B) beläuft.

40. Verfahren nach Anspruch 39, wobei (B)(1) 3,5-Diethyl-2,4-toluoldiamin, 3,5-Diethyl-2,6-toluoldiamin oder eine Mischung davon umfasst; (B)(2) einen Polyasparaginsäureester umfasst und (B)(3) ein Polyetherpolyol, ein Polyesterpolyol oder ein Polyetherglykol umfasst.

41. Verfahren zur Herstellung eines Polyurethanharnstoffs, umfassend
(1) Umsetzen von
(A) mindestens einem (cyclo)aliphatischen Polyisocyanatprepolymer mit einem NCO-Gruppengehalt von 4 bis 50% und einer durchschnittlichen Funktionalität von 2 bis 3, umfassend das Reaktionsprodukt von
(1) mindestens einem (cyclo)aliphatischen Polyisocyanat mit
(2) mindestens einer organischen Verbindung, die mindestens zwei Hydroxylgruppen enthält und ein Molekulargewicht von 100 bis 4000 aufweist;
mit
(B) einer gegenüber Isocyanat reaktiven Komponente, umfassend:
(1) eine oder mehrere aromatische Diaminverbindungen mit zwei primären aromatischen Amingruppen und einem Molekulargewicht von 100 bis 1000,
(2) eine oder mehrere gegenüber Isocyanat reaktive Verbindungen mit zwei sekundären Amingruppen und einem Molekulargewicht von 100 bis 750, wobei die sekundären Amingruppen an (cyclo)aliphatische und/oder aromatische Gruppen gebunden sind;
und
(3) eine oder mehrere hydroxylfunktionelle Verbindungen mit einer Funktionalität von 2,0 bis 3,0 und einem Molekulargewicht von 100 bis 4000;
gegebenenfalls in Gegenwart von
(C) einem oder mehreren Katalysatoren,
wobei die relativen Mengen von (A) und (B) so bemessen werden, dass der Isocyanat-Index 95 bis 110 beträgt, das Äquivalentverhältnis von NCO zu OH in dem Prepolymer 2,25:1,0 bis 20,0:1,0 beträgt und das NH₂:NCO-Äquivalentverhältnis 0,6:1,0 bis 0,95:1,0 beträgt.

42. Verfahren nach Anspruch 41, wobei (A)(1) 4,4'-Dicyclohexylmethandiisocyanat umfasst, (B)(1) 3,5-Diethyl-2,4-toluoldiamin, 3,5-Diethyl-2,6-toluoldiamin oder eine Mischung davon umfasst und (B)(2) einen Polyasparaginsäureester umfasst.

## Revendications

1. Polyuréthane-urée comprenant le produit de réaction de :
(A) au moins un polyisocyanate (cyclo)aliphatique ou prépolymère de polyisocyanate (cyclo)aliphatique ayant une teneur en groupes NCO de 4 à 50 %, et une fonctionnalité moyenne de 2 à 3;
avecze
(B) un composant réactif aux isocyanates comprenant :
(1) un ou plusieurs composés de diamines aromatiques contenant deux groupes amines primaires aromatiques et ayant un poids moléculaire de 100 à 1000,
(2) un ou plusieurs composés réactifs aux isocyanates contenant deux groupes amines secondaires et ayant un poids moléculaire de 100 à 750, les groupes amines secondaires étant attachés à des groupes (cyclo)aliphatiques et/ou aromatiques ;
et, éventuellement,
(3) un ou plusieurs composés hydroxyfonctionnels ayant une fonctionnalité de 2,0 à 3,0 et un poids moléculaire de 100 à 4000 ; éventuellement, en présence de
(C) un ou plusieurs catalyseurs,
les quantités relatives de (A) et (B) étant telles que l'indice d'isocyanate est de 95 à 110.

2. Polyuréthane-urée selon la revendication 1, dans laquelle (A) comprend un prépolymère de polyisocyanate qui comprend le produit de réaction de :
(1) un polyisocyanate (cyclo)aliphatique ayant une teneur en groupes NCO de 4 % à 50 % et une fonctionnalité de 2,0 à 3,0, ledit polyisocyanate (cyclo)aliphatique étant choisi dans le groupe constitué par le diisocyanate de 4,4'-dicyclohexylméthane, le diisocyanate de 1,6-hexaméthylène, le diisocyanate d'isophorone, le diisocyanate de 1,4-cyclohexane, le diisocyanate de m-tétraméthylxylène et les mélanges de ceux-ci,
et
(2) au moins un composé organique qui contient au moins deux groupes hydroxyle et a un poids moléculaire de 100 à 4000 ;
dans lequel le rapport équivalent de NCO à OH est de 2,25:1,0 à 20,0:1,0.

3. Polyuréthane-urée selon la revendication 2, dans laquelle (A) comprend un prépolymère de polyisocyanate et le rapport équivalent de NCO à OH dans le prépolymère est de 5,0:1,0 à 12,25:1,0.

4. Polyuréthane-urée selon la revendication 2, dans laquelle (A) comprend un prépolymère de polyisocyanate et le rapport équivalent de NCO à OH dans le prépolymère est de 6,0:1,0 à 10,0:1,0.

5. Polyuréthane-urée selon la revendication 1, dans laquelle (B) ledit composant réactif aux isocyanates comprend :
(1) un ou plusieurs composés de diamines aromatiques contenant deux groupes amines primaires aromatiques et ayant un poids moléculaire de 100 à 400,
et
(2) un ou plusieurs composés réactifs aux isocyanates contenant deux groupes amines secondaires qui sont des groupes amines aliphatiques et/ou aromatiques, et ayant un poids moléculaire de 100 à 750.

6. Polyuréthane-urée selon la revendication 1, dans laquelle le rapport équivalent de NH₂:NCO est de 0,6:1,0 à 0,95:1,0.

7. Polyuréthane-urée selon la revendication 6, dans laquelle le rapport équivalent de NH₂/NCO est de 0,6:1,0 à 0,9:1,0.

8. Polyuréthane-urée selon la revendication 6, dans laquelle le rapport équivalent de NH₂/NCO est de 0,65:1,0 à 0,75:1,0.

9. Polyuréthane-urée selon la revendication 1, dans laquelle le composant (A) comprend :
(A)(1) de 20 à 100 % en poids, rapporté à 100 % en poids de (A), d'un polyisocyanate (cyclo)aliphatique ;
et
(A)(2) de 0 à 80 % en poids, rapporté à 100 % en poids de (A), d'au moins un composé organique qui contient au moins deux groupes hydroxyle et a un poids moléculaire de 100 à 4000 ;
la somme des % en poids de (A)(1) et (A)(2) faisant au total 100 % en poids de (A).

10. Polyuréthane-urée selon la revendication 9, dans laquelle (A) comprend de 60 à 90 % en poids de (A)(1) et de 10 à 40 % en poids de (A)(2).

11. Polyuréthane-urée selon la revendication 1, dans laquelle (A)(1) comprend du diisocyanate de 4,4'-dicyclohexylméthane et (A)(2) comprend un polyester-polyol, un polyéther glycol, un polyéther-polyol ou un mélange de ceux-ci.

12. Polyuréthane-urée selon la revendication 11, dans laquelle (A)(2) comprend un polycaprolactone-polyester-polyol.

13. Polyuréthane-urée selon la revendication 2, dans laquelle (A)(2) comprend (i) un polyester-polyol, un polyéther-polyol, ou un mélange de ceux-ci, et (ii) un agent d'allongement de chaîne ou agent de réticulation trifonctionnel.

14. Polyuréthane-urée selon la revendication 1, dans laquelle (B)(1) ladite diamine aromatique a un poids moléculaire de 100 à 400 et comprend le 1,4-diaminobenzène, le 2,4-diaminotoluène, le 2,6-diaminotoluène, la 3,5-diéthyl-2,4-toluènediamine, la 3,5-diéthyl-2,6-toluènediamine, le 3,5-dithiométhyl-2,4-diaminotoluène, le 2,4'-diaminodiphénylméthane, le 4,4'-diaminodiphénylméthane et les mélanges de ceux-ci.

15. Polyuréthane-urée selon la revendication 1, dans laquelle (B)(2) comprend une diamine aromatique N-alkyl-substituée, une diamine aromatique N,N'-dialkyl-substituée, une isophoronediamine N,N'-dialkyl-substituée, une diamine secondaire aliphatique, un ester polyaspartique, ou un mélange de ceux-ci.

16. Polyuréthane-urée selon la revendication 1, dans laquelle (B) le composant réactif aux isocyanates comprend :
(B)(1) de 10 à 95 % en poids d'au moins une diamine aromatique qui contient deux groupes amines primaires liés à des groupes aromatiques et ayant un poids moléculaire de 100 à 400,
et
(B)(2) de 5 à 90 % en poids d'au moins un composant réactif aux isocyanates contenant 2 groupes amines secondaires qui sont attachés à des groupes (cyclo)aliphatiques et/ou aromatiques et ayant un poids moléculaire de 200 à 600 ;
la somme des % en poids de (B)(1) et (B)(2) faisant au total 100 % en poids de (B).

17. Polyuréthane-urée selon la revendication 1, dans laquelle (B)(1) comprend de la 3,5-diéthyl-2,4-toluènediamine, de la 3,5-diéthyl-2,6-toluènediamine ou un mélange de celles-ci ; et (B)(2) comprend un ester polyaspartique.

18. Polyuréthane-urée selon la revendication 1, dans laquelle (B) ledit composant réactif aux isocyanates comprend :
(B)(1) de 30 à 79 % en poids d'au moins une diamine aromatique qui contient deux groupes amines primaires liés à des groupes aromatiques et ayant un poids moléculaire de 100 à 1000 ;
(B)(2) de 1 à 20 % en poids d'au moins un composant réactif aux isocyanates contenant 2 groupes amines secondaires qui sont attachés à des groupes (cyclo)aliphatiques et/ou aromatiques et ayant un poids moléculaire de 100 à 750 ;
et
(B)(3) de 20 à 50 % en poids d'un ou plusieurs composés hydroxyfonctionnels ayant une fonctionnalité OH de 2 à 3 et un poids moléculaire de 100 à 4000 ;
la somme des % en poids de (B)(1), (B)(2) et (B)(3) faisant au total 100 % en poids de (B).

19. Polyuréthane-urée selon la revendication 18, dans laquelle (B)(1) comprend de la 3,5-diéthyl-2,4-toluènediamine, de la 3,5-diéthyl-2,6-toluènediamine ou un mélange de celles-ci ; (B)(2) comprend un ester polyaspartique ; et (B)(3) comprend un polyéther-polyol, un polyester-polyol ou un polyéther glycol.

20. Polyuréthane-urée comprenant le produit de réaction de :
(A) au moins un prépolymère de polyisocyanate (cyclo)aliphatique ayant une teneur en groupes NCO de 4 à 50 %, et une fonctionnalité moyenne de 2 à 3, et comprenant le produit de réaction de :
(1) au moins un polyisocyanate (cyclo)aliphatique,
avec
(2) au moins un composé organique qui contient au moins deux groupes hydroxyle et a un poids moléculaire de 100 à 4000 ;
avec
(B) un composant réactif aux isocyanates comprenant :
(1) un ou plusieurs composés de diamines aromatiques contenant deux groupes amines primaires aromatiques et ayant un poids moléculaire de 100 à 1000,
(2) un ou plusieurs composés réactifs aux isocyanates contenant deux groupes amines secondaires et ayant un poids moléculaire de 100 à 750, les groupes amines secondaires étant attachés à des groupes (cyclo)aliphatiques et/ou aromatiques,
et
(3) un ou plusieurs composés hydroxyfonctionnels ayant une fonctionnalité de 2,0 à 3,0 et un poids moléculaire de 100 à 4000 ; éventuellement, en présence de
(C) un ou plusieurs catalyseurs,
les quantités relatives de (A) et (B) étant telles que l'indice d'isocyanate est de 95 à 110, le rapport équivalent de NCO à OH dans le prépolymère étant de 2,25:1,0 à 20,0:1,0 et le rapport équivalent de NH₂:NCO étant de 0,6:1,0 à 0,95:1,0.

21. Polyuréthane-urée selon la revendication 20, dans laquelle (A)(1) comprend du diisocyanate de 4,4'-dicyclohexylméthane ; (B)(1) comprend de la 3,5-diéthyl-2,4-toluènediamine, de la 3,5-diéthyl-2,6-toluènediamine ou un mélange de celles-ci ; et (B)(2) comprend un ester polyaspartique.

22. Procédé de production d'une polyuréthane-urée comprenant
(1) la réaction de
(A) au moins un polyisocyanate (cyclo)aliphatique ou prépolymère de polyisocyanate (cyclo)aliphatique ayant une teneur en groupes NCO de 4 à 50 %, et une fonctionnalité moyenne de 2 à 3;
avec
(B) un composant réactif aux isocyanates comprenant :
(1) un ou plusieurs composés de diamines aromatiques contenant deux groupes amines primaires aromatiques et ayant un poids moléculaire de 100 à 1000,
(2) un ou plusieurs composés réactifs aux isocyanates contenant deux groupes amines secondaires, et ayant un poids moléculaire de 100 à 750, les groupes amines secondaires étant attachés à des groupes (cyclo)aliphatiques et/ou aromatiques ;
et, éventuellement,
(3) un ou plusieurs composés hydroxyfonctionnels ayant une fonctionnalité de 2,0 à 3,0 et un poids moléculaire de 100 à 4000 ;
éventuellement, en présence de
(C) un ou plusieurs catalyseurs,
les quantités relatives de (A) et (B) étant telles que l'indice d'isocyanate est de 95 à 110.

23. Procédé selon la revendication 22, dans lequel (A) comprend un prépolymère de polyisocyanate comprenant le produit de réaction de :
(1) un polyisocyanate (cyclo)aliphatique ayant une teneur en groupes NCO de 4 % à 50 % et une fonctionnalité de 2,0 à 3,0, ledit polyisocyanate (cyclo)aliphatique étant choisi dans le groupe constitué par le diisocyanate de 4,4'-dicyclohexylméthane, le diisocyanate de 1,6-hexaméthylène, le diisocyanate d'isophorone, le diisocyanate de 1,4-cyclohexane, le diisocyanate de m-tétraméthylxylène et les mélanges de ceux-ci,
et
(2) au moins un composé organique qui contient au moins deux groupes hydroxyle et a un poids moléculaire de 100 à 4000 ;
dans lequel le rapport équivalent de NCO à OH dans le prépolymère est de 2,25:1,0 à 20,0:1,0.

24. Procédé selon la revendication 23, dans lequel (A) comprend un prépolymère de polyisocyanate et le rapport équivalent de NCO à OH dans le prépolymère est de 5,0:1,0 à 12,25:1,0.

25. Procédé selon la revendication 23, dans lequel (A) comprend un prépolymère de polyisocyanate et le rapport équivalent de NCO à OH dans le prépolymère est de 6,0:1,0 à 10,0:1,0.

26. Procédé selon la revendication 22, dans lequel (B) ledit composant réactif aux isocyanates comprend :
(1) un ou plusieurs composés de diamines aromatiques contenant deux groupes amines primaires aromatiques et ayant un poids moléculaire de 100 à 400,
et
(2) un ou plusieurs composés réactifs aux isocyanates contenant deux groupes amines secondaires qui sont des groupes amines aliphatiques et/ou aromatiques, et ayant un poids moléculaire d'environ 100 à 750.

27. Procédé selon la revendication 22, dans lequel le rapport équivalent de NH₂:NCO est de 0,6:1,0 à 0,95:1,0.

28. Procédé selon la revendication 27, dans lequel le rapport équivalent de NH₂/NCO est de 0,6:1,0 à 0,9:1,0.

29. Procédé selon la revendication 27, dans lequel le rapport équivalent de NH₂/NCO est de 0,65:1,0 à 0,75:1,0.

30. Procédé selon la revendication 22, dans lequel le composant (A) comprend :
(A)(1) de 20 à 100 % en poids, rapporté à 100 % en poids de (A), d'un polyisocyanate (cyclo)aliphatique ;
et
(A)(2) de 0 à 80 % en poids, rapporté à 100 % en poids de (A), d'au moins un composé organique qui contient au moins deux groupes hydroxyle et a un poids moléculaire de 100 à 4000 ;
la somme des % en poids de (A)(1) et (A)(2) faisant au total 100 % en poids de (A).

31. Procédé selon la revendication 30, dans lequel (A) comprend de 60 à 90 % en poids de (A)(1) et de 10 à 40 % en poids de (A)(2).

32. Procédé selon la revendication 22, dans lequel (A)(1) comprend du diisocyanate de 4,4'-dicyclohexylméthane et (A)(2) comprend un polyester-polyol, un polyéther glycol, un polyéther-polyol ou un mélange de ceux-ci.

33. Procédé selon la revendication 32, dans lequel (A)(2) comprend un polycaprolactone-polyester-polyol.

34. Procédé selon la revendication 23, dans lequel (A)(2) comprend (i) un polyester-polyol, un polyéther-polyol, ou un mélange de ceux-ci, et (ii) un agent d'allongement de chaîne ou agent de réticulation trifonctionnel.

35. Procédé selon la revendication 22, dans lequel (B)(1) ladite diamine aromatique a un poids moléculaire de 100 à 400 et comprend le 1,4-diaminobenzène, le 2,4-diaminotoluène, le 2,6-diaminotoluène, la 3,5-diéthyl-2,4-toluènediamine, la 3,5-diéthyl-2,6-toluènediamine, le 3,5-dithiométhyl-2,4-diaminotoluène, le 2,4'-diaminodiphénylméthane, le 4,4'-diaminodiphénylméthane et les mélanges de ceux-ci.

36. Procédé selon la revendication 22, dans lequel (B)(2) comprend une diamine aromatique N-alkyl-substituée, une diamine aromatique N,N'-dialkyl-substituée, une isophoronediamine N,N'-dialkyl-substituée, une diamine secondaire aliphatique, un ester polyaspartique, ou un mélange de ceux-ci.

37. Procédé selon la revendication 22, dans lequel (B) le composant réactif aux isocyanates comprend :
(B)(1) de 10 à 95 % en poids d'au moins une diamine aromatique qui contient deux groupes amines primaires liés à des groupes aromatiques et ayant un poids moléculaire de 100 à 400,
et
(B)(2) de 5 à 90 % en poids d'au moins un composant réactif aux isocyanates contenant 2 groupes amines secondaires qui sont attachés à des groupes (cyclo)aliphatiques et/ou aromatiques et ayant un poids moléculaire de 200 à 600 ;
la somme des % en poids de (B)(1) et (B)(2) faisant au total 100 % en poids de (B).

38. Procédé selon la revendication 22, dans lequel (B)(1) comprend de la 3,5-diéthyl-2,4-toluènediamine, de la 3,5-diéthyl-2,6-toluènediamine ou un mélange de celles-ci ; et (B)(2) comprend un ester polyaspartique.

39. Procédé selon la revendication 22, dans lequel (B) ledit composant réactif aux isocyanates comprend :
(B)(1) de 30 à 79 % en poids d'au moins une diamine aromatique qui contient deux groupes amines primaires liés à des groupes aromatiques et ayant un poids moléculaire de 100 à 1000 ;
(B)(2) de 1 à 20 % en poids d'au moins un composant réactif aux isocyanates contenant 2 groupes amines secondaires qui sont attachés à des groupes (cyclo)aliphatiques et/ou aromatiques et ayant un poids moléculaire de 100 à 750 ;
et
(B)(3) de 20 à 50 % en poids d'un ou plusieurs composés hydroxyfonctionnels ayant une fonctionnalité OH de 2 à 3 et un poids moléculaire de 100 à 4000 ;
la somme des % en poids de (B)(1), (B)(2) et (B)(3) faisant au total 100 % en poids de (B).

40. Procédé selon la revendication 39, dans lequel (B)(1) comprend de la 3,5-diéthyl-2,4-toluènediamine, de la 3,5-diéthyl-2,6-toluènediamine ou un mélange de celles-ci ; (B)(2) comprend un ester polyaspartique ; et (B)(3) comprend un polyéther-polyol, un polyester-polyol ou un polyéther glycol.

41. Procédé de production de polyuréthane-urées, comprenant
(1) la réaction de :
(A) au moins un prépolymère de polyisocyanate (cyclo)aliphatique ayant une teneur en groupes NCO de 4 à 50 %, et une fonctionnalité moyenne de 2 à 3, et qui comprend le produit de réaction de :
(1) au moins un polyisocyanate (cyclo)aliphatique,
avec
(2) au moins un composé organique qui contient au moins deux groupes hydroxyle et a un poids moléculaire de 100 à 4000 ;
avec
(B) un composant réactif aux isocyanates qui comprend :
(1) un ou plusieurs composés de diamines aromatiques contenant deux groupes amines primaires aromatiques et ayant un poids moléculaire de 100 à 1000,
(2) un ou plusieurs composés réactifs aux isocyanates contenant deux groupes amines secondaires et ayant un poids moléculaire de 100 à 750, les groupes amines secondaires étant attachés à des groupes (cyclo)aliphatiques et/ou aromatiques,
et
(3) un ou plusieurs composés hydroxyfonctionnels ayant une fonctionnalité de 2,0 à 3,0 et un poids moléculaire de 100 à 4000 ; éventuellement, en présence de
(C) un ou plusieurs catalyseurs,
les quantités relatives de (A) et (B) étant telles que l'indice d'isocyanate est de 95 à 110, le rapport équivalent de NCO à OH dans le prépolymère étant de 2,25:1,0 à 20,0:1,0 et le rapport équivalent de NH₂:NCO étant de 0,6:1,0 à 0,95:1,0.

42. Procédé selon la revendication 41, dans lequel (A)(1) comprend du diisocyanate de 4,4'-dicyclohexylméthane ; (B)(1) comprend de la 3,5-diéthyl-2,4-toluènediamine, de la 3,5-diéthyl-2,6-toluènediamine ou un mélange de celles-ci ; et (B)(2) comprend un ester polyaspartique.
